# FASCICULE DE BREVET EUROPEEN

(11) **EP 3 094 595 B1**
(45) Date de publication et mention de la délivrance du brevet: **25.04.2018**
(21) Numéro de dépôt: 15700571.1
(22) Date de dépôt: 14.01.2015
(51) Int. Cl.: C01G 43/025, C01G 56/00, G21C 3/62

(54) **PROCÉDÉ DE PRÉPARATION D'UNE POUDRE D'OXYDE MÉTALLIQUE, PROCÉDÉ DE FABRICATION D'UNE PASTILLE D'OXYDE MÉTALLIQUE, POUDRE ET PASTILLE TELLES QU'OBTENUES SELON CES PROCÉDÉS ET LEURS UTILISATIONS**
VERFAHREN ZUR HERSTELLUNG EINES METALLOXIDPULVERS, VERFAHREN ZUR HERSTELLUNG EINES METALLOXIDPELLETS, NACH DIESEM VERFAHREN HERGESTELLTES PULVER UND PELLET ERHALTEN SOWIE VERWENDUNGEN DAVON
PROCESS FOR PREPARING A METAL OXIDE POWDER, PROCESS FOR MANUFACTURING A METAL OXIDE PELLET, POWDER AND PELLET AS OBTAINED ACCORDING TO THESE PROCESSES AND USES THEREOF

(30) Priorité: 14.01.2014 FR 1450276
(43) Date de publication de la demande: 23.11.2016
(73) Titulaire: Orano Cycle, 92400 Courbevoie (FR); Commissariat à l'Énergie Atomique et aux Énergies Alternatives, 75015 Paris (FR)
(72) Inventeur: MARTINEZ, Julien, F-30700 Uzès (FR); AUDUBERT, Fabienne, F-84160 Cadenet (FR); CLAVIER, Nicolas, F-30150 Sauveterre (FR); DACHEUX, Nicolas, F-30650 Rochefort du Gard (FR)
(74) Mandataire: Brevalex
(86) Numéro de dépôt international: PCT/EP2015/050603
(87) Numéro de publication internationale: WO 2015/107086

(56) Documents cités:
- EP-A1- 0 351 334
- EP-A1- 0 491 635
- BE-A- 657 170
- CH-A- 478 442
- FR-A- 1 489 438
- FR-A1- 2 424 231
- US-A- 3 923 933
- US-A- 4 382 885

## Description

### DOMAINE TECHNIQUE

La présente invention se rapporte à un procédé de préparation d'une poudre d'un oxyde métallique, cet oxyde métallique étant un oxyde d'au moins un métal qui présente un nombre d'oxydation compris entre (III) et (VI).

Elle se rapporte également à un procédé de fabrication d'une pastille d'un oxyde métallique à partir de la poudre d'oxyde métallique telle que préparée par le procédé mentionné ci-dessus.

L'invention permet d'obtenir une poudre d'un oxyde métallique de forte réactivité ainsi qu'une pastille d'un oxyde métallique. Ces propriétés de forte réactivité sont intimement liées à la granulométrie des particules formant la poudre de l'oxyde métallique préparée selon le procédé de l'invention, cette poudre présentant une surface spécifique très importante.

La poudre obtenue peut être une poudre d'un oxyde métallique simple telle qu'une poudre d'oxyde d'uranium ou d'oxyde de cérium, ou encore une poudre d'un oxyde métallique mixte telle qu'une poudre d'un oxyde mixte d'uranium et de cérium, d'un oxyde mixte de cérium et de gadolinium ou d'un oxyde mixte d'uranium et de plutonium.

La poudre ainsi que la pastille telles qu'obtenues par les procédés selon l'invention peuvent être utilisées dans de nombreux domaines et, en particulier, dans le domaine de l'industrie nucléaire ou encore dans le domaine des conducteurs ioniques.

### ÉTAT DE LA TECHNIQUE ANTÉRIEURE

Parmi les oxydes d'actinides et/ou de lanthanides utilisés dans le domaine de l'industrie nucléaire, le dioxyde d'uranium UO₂ ainsi que certains oxydes mixtes à base d'uranium, tels que l'oxyde mixte d'uranium et de plutonium (U,Pu)O₂ ou encore l'oxyde mixte d'uranium et de thorium (U,Th)O₂, font partie des oxydes mixtes métalliques les plus couramment utilisés pour la fabrication de combustibles nucléaires.

Ces oxydes métalliques, simples ou mixtes, se présentent classiquement sous forme de pastilles compactées et frittées, qui doivent répondre à un certain nombre d'exigences imposées par l'industrie nucléaire. Parmi ces exigences, de telles pastilles de combustible nucléaire doivent présenter une densité élevée, typiquement supérieure ou égale à 95%.

La densité finale de la pastille est notamment fonction des propriétés de la poudre d'oxyde métallique à partir de laquelle la pastille est obtenue, notamment de la réactivité de ladite poudre. Elle est aussi fonction d'autres paramètres de la poudre tels que l'homogénéité, l'absence d'impuretés, et des paramètres de procédé tels que les paramètres du frittage.

La réactivité, étant une propriété liée à la surface spécifique des particules de la poudre formant les pastilles, de nombreuses recherches ont, par conséquent, été conduites pour proposer un procédé de fabrication de pastilles de combustible nucléaire comprenant des particules d'oxyde métallique dont le diamètre moyen est le plus faible possible.

De manière classique, les procédés de fabrication de pastilles de combustible nucléaire comportent plusieurs étapes successives réalisées à partir d'une solution aqueuse de sels solubles du ou des métaux présents dans la poudre d'oxyde métallique entrant dans la constitution des pastilles de combustible nucléaire. De tels sels métalliques solubles sont, en général, constitués par des nitrates ou des sulfates du ou des métaux considérés.

Ainsi, le document GB 1,128,838, référencé **[1]** à la fin de la présente description, décrit un procédé de préparation d'éléments combustibles d'oxydes d'uranium et de plutonium utilisables dans les réacteurs nucléaires. Dans ce procédé, l'uranium et le plutonium sont co-précipités à partir d'une solution aqueuse de manière rapide et sous une forme permettant leur filtration, puis leur séchage. Plus particulièrement, le procédé décrit dans le document **[1]** comprend successivement et dans cet ordre :
(a) la mise en contact, avec de l'hydroxyde d'ammonium, d'une solution de nitrate d'uranyle et de nitrate de plutonium, dans un rapport de concentrations molaires en uranium et en plutonium voisin de l'unité, conduisant à la co-précipitation d'un mélange intime d'oxydes hydratés de diuranate d'ammonium et de plutonium,
(b) la filtration du précipité sur un appareil de filtration conventionnel,
(c) plusieurs lavages, à l'eau et à l'acétone, du précipité filtré,
(d) le séchage à l'air du précipité lavé, puis
(e) la réduction, sous atmosphère réductrice comprenant du dihydrogène, à une température comprise entre 600°C et 900°C, du précipité séché pour la conversion des composés comprenant de l'uranium et du plutonium en une poudre d'oxydes d'uranium et de plutonium, cette poudre étant facilement frittable.

Selon le document **[1],** cette poudre peut être passée dans un broyeur à boulets puis au travers d'un tamis "*présentant 325 ouvertures par inch linéaire*", indiquant ainsi que le diamètre des particules formant la poudre d'oxydes d'uranium et de plutonium obtenue est de l'ordre de quelques dizaines de micromètres.

Le procédé décrit dans le document **[1]** peut également comprendre une étape complémentaire de compactage sous pression élevée de la poudre obtenue à l'issue de l'étape (e), suivie d'une étape de frittage pour l'obtention de pastilles d'oxydes d'uranium et de plutonium.

L'inconvénient majeur du procédé de préparation décrit dans le document **[1]** réside dans le nombre relativement important d'étapes successives qu'il comprend. De plus, ce procédé met en oeuvre une étape (e) de réduction qui, étant conduite à des températures comprises entre 600°C et 900°C, est consommatrice d'énergie, ainsi qu'une étape additionnelle de broyage pour obtenir un diamètre de particules constitutives de la poudre qui soit le plus petit possible.

Le document US 4,314,952, référencé **[2],** se rapporte à un procédé de fabrication de pastilles de dioxyde d'uranium UO₂ destinées à une utilisation dans les réacteurs nucléaires, ces pastilles présentant une masse volumique élevée ainsi qu'une taille de ses particules constitutives supérieure à 50 µm et, avantageusement, comprise entre 50 µm et 1000 µm environ. Le procédé décrit dans le document **[2]** comprend successivement et dans cet ordre :
(a) la mise en contact d'un nitrate d'uranyle avec une source de soufre, en général de l'acide sulfurique, à une température comprise entre 300°C et 400°C, conduisant à un trioxyde d'uranium contenant du soufre,
(b) la mise en contact, avec du nitrate d'ammonium, de ce trioxyde d'uranium, conduisant à une suspension comprenant un uranate d'ammonium insoluble contenant du soufre,
(c) la mise en contact, avec de l'hydroxyde d'ammonium, de cette suspension, pour précipiter l'uranium resté en solution sous forme d'uranate d'ammonium insoluble,
(d) la récupération puis le séchage de l'uranate d'ammonium,
(e) la réduction de l'uranate d'ammonium séché en dioxyde d'uranium UO₂,
(f) le compactage du dioxyde d'uranium sous forme de pastilles, puis
(g) le frittage desdites pastilles, sous atmosphère de dihydrogène, à une température élevée.

En plus de recourir à un nombre relativement important d'étapes dont une étape de réduction conduite à température élevée, le procédé de fabrication de pastilles de dioxyde d'uranium décrit dans le document **[2]** présente, comme autre inconvénient majeur, de conduire à des composés contenant du soufre.

Le document US 4,382,885, référencé **[3],** se rapporte également à la fabrication de combustibles nucléaires se présentant sous la forme de pastilles, ces pastilles étant elles-mêmes formées de sphères frittées. Ces sphères frittées sont réalisées en un matériau fissile et présentent un diamètre de l'ordre de 100 µm à 1000 µm. Le procédé associé ne comporte pas moins d'une dizaine d'étapes, dont une étape consistant à former des gouttes par le passage d'une suspension tamisée au travers d'une buse. Plus précisément, la suspension est formée par une solution d'un ou de plusieurs sels d'actinides en présence d'un réactif choisi parmi l'hydroxyde d'ammonium, l'oxalate d'ammonium, l'acide oxalique et un mélange de ces composés. Ces gouttes de suspension sont ensuite mises en contact avec de l'ammoniac gazeux puis avec une solution d'hydroxyde d'ammonium concentrée pour transformer, par gélification, lesdites gouttes en sphères solidifiées. Après lavage et séchage dans un four à une température comprise entre 150°C et 400°C, les sphères séchées sont ensuite calcinées à une température comprise entre 400°C et 800°C, compactées sous forme de pastilles qui sont alors frittées à une température comprise entre 1450°C et 1700°C.

Le procédé décrit dans le document **[3]** se caractérise par un nombre excessivement important d'étapes, dont certaines, comme celles consistant à former les gouttes au moyen d'une buse puis à mettre ces gouttes au contact d'ammoniac gazeux pour former des sphères gélifiées, sont de mise en oeuvre particulièrement complexe.

Le document US 4,971,734, référence **[4],** décrit un procédé d'obtention de pastilles combustibles nucléaires d'oxydes frittés répondant à la formule MₓO_{y}, M représentant un ou plusieurs éléments chimiques classiquement utilisés dans la fabrication des pastilles combustibles nucléaires, tels que l'uranium, le plutonium, le thorium, le cérium, le gadolinium ou encore le hafnium.

Le procédé décrit dans le document **[4]** comprend successivement et dans cet ordre :
(a) le traitement, par du peroxyde d'hydrogène et de l'ammoniac, d'une solution comprenant un ou plusieurs sels du ou des éléments M, conduisant à un précipité de peroxyde,
(b) la filtration du précipité,
(c) la calcination du précipité filtré,
(d) la réduction, dans un four, du précipité calciné, conduisant à une poudre intermédiaire d'oxydes, puis
(e) le pressage de la poudre intermédiaire, puis
(f) le frittage de la poudre intermédiaire pressée conduisant à l'obtention de pastilles d'oxydes frittés de très forte densité, en général supérieure à 96%.

Bien que le document **[4]** décrive que l'on obtient une poudre intermédiaire formée de particules sphériques présentant une granulométrie contrôlée et resserrée, sans étape additionnelle de broyage, de tamisage et/ou de granulation, il indique toutefois que cette poudre intermédiaire est "débarrassée des agglomérats qui auraient pu se former lors des traitements thermiques".

Comme tous les procédés ci-dessus, le procédé du document **[4]** met en oeuvre des étapes particulièrement consommatrices d'énergie, en l'espèce une étape de calcination ainsi qu'une étape de réduction.

Le but de l'invention est, par conséquent, de pallier les inconvénients de l'art antérieur et de proposer un procédé de préparation d'une poudre d'un oxyde d'au moins un métal, chaque métal ayant un nombre d'oxydation compris entre (III) et (VI), en particulier de (III), de (IV) et/ou de (VI) et, notamment, de (III) et/ou de (IV), permettant d'obtenir une poudre présentant une forte réactivité et une granulométrie la plus fine possible et, notamment, un diamètre moyen de particules inférieur ou égal à 1 µm et, avantageusement, à 100 nm et ce, en un nombre d'étapes réduit par rapport à celui des procédés de préparation de l'art antérieur, tels que ceux décrits dans les documents **[1]** à **[3].** En particulier, ce procédé doit permettre d'atteindre une telle granulométrie, en l'absence d'étape de broyage.

Ce procédé doit, en outre, permettre d'obtenir une poudre d'un tel oxyde d'au moins un métal en l'absence d'étapes particulièrement consommatrices d'énergie thermique, telles qu'une étape de séchage à plus de 100°C, une étape de calcination et/ou une étape de réduction.

De manière plus générale, le procédé selon l'invention doit être le plus direct possible et permettre une mise en oeuvre industrielle qui soit techniquement et économiquement optimisée.

### EXPOSÉ DE L'INVENTION

Les buts précédemment énoncés ainsi que d'autres sont atteints, en premier lieu, par un procédé de préparation d'une poudre d'un oxyde d'au moins un métal, chaque métal ayant un nombre d'oxydation compris entre (III) et (VI).

Il est précisé que l'expression "*compris(e) entre ... et*..." qui vient d'être citée et qui est utilisée dans la présente demande doit être comprise comme définissant non seulement les valeurs de l'intervalle, mais également les valeurs des bornes de cet intervalle.

Ainsi, le procédé permet de préparer une poudre d'un oxyde d'au moins un métal, chaque métal ayant un nombre d'oxydation de (III), de (IV), de (V) et/ou de (VI), en particulier de (III), de (IV) et/ou de (VI) et, notamment, de (III) et/ou de (IV).

Selon l'invention, ce procédé comprend successivement et dans cet ordre :
(a) la réaction, avec un composé comprenant un hydroxyde, d'une solution aqueuse comprenant, pour chaque métal, au moins un sel du cation dudit métal, conduisant à un précipité de l'oxyde hydraté dudit au moins un métal,
(b) la séparation du précipité obtenu,
(c) la mise en contact du précipité séparé avec un solvant polaire protique organique,
(d) l'élimination du solvant polaire protique organique par séchage sous vide du précipité, conduisant à la poudre de l'oxyde hydraté dudit au moins un métal, ladite poudre étant formée de particules dont le diamètre moyen est inférieur ou égal à 1 µm.

Le procédé selon l'invention permet donc d'obtenir une poudre d'un oxyde métallique présentant une forte réactivité et ce, en un nombre particulièrement restreint d'étapes, contrairement aux procédés de l'art antérieur tels que ceux décrits dans les documents **[1]** à **[3].**

Plus particulièrement, le procédé selon l'invention permet d'obtenir cette poudre d'un oxyde métallique avec une granulométrie particulière fine, en l'absence d'étapes supplémentaires de réduction, de séchage à température relativement élevée (typiquement supérieure à 100°C), de calcination et/ou de broyage.

L'obtention de cette poudre avec une telle granulométrie résulte de la combinaison particulière des étapes (a) à (d) du procédé et, en particulier, comme on le verra ci-après, du choix d'un composé comprenant un hydroxyde comme réactif permettant la précipitation de l'oxyde métallique hydraté et d'une étape de séchage sous vide de ce même oxyde métallique hydraté préalablement placé dans un solvant polaire protique organique.

Comme cela ressort clairement de l'exposé détaillé de modes de réalisation particuliers décrits ci-après, les Inventeurs ont observé, lorsque la solution aqueuse, qui comprend, pour chaque métal, au moins un sel du cation dudit métal, réagit avec un composé comprenant un hydroxyde, il se forme tout d'abord un précipité d'un hydroxyde hydraté dudit au moins un métal. Toutefois, ce précipité d'un hydroxyde métallique hydraté étant un composé particulièrement réactif, il évolue spontanément pour se transformer en un précipité de l'oxyde hydraté dudit au moins un métal, étant précisé que cet oxyde métallique hydraté évolue lui-même progressivement d'une structure amorphe vers une structure cristalline. Cette transformation de l'hydroxyde métallique hydraté en oxyde métallique hydraté se produit en l'absence de modification des propriétés physico-chimiques du précipité, qui conserve, en particulier, sa réactivité.

Après séparation, par exemple par filtration ou par centrifugation, du précipité formé par cet oxyde métallique hydraté, ce dernier est mis en contact, lors de l'étape (c), avec un solvant polaire protique organique, qui est ensuite éliminé par séchage sous vide. Grâce à cette étape (d) particulière, le solvant polaire protique organique est éliminé de manière progressive. De plus, la suspension formée par le précipité d'un oxyde métallique hydraté et le solvant polaire protique organique subit un refroidissement homogène, ce qui permet de préserver la réactivité de la poudre d'un oxyde métallique hydraté et d'éviter que ne se produise une agglomération des particules formant cette poudre. En outre, le séchage sous vide permet, soit d'éliminer plus rapidement le solvant polaire protique organique qu'un simple séchage à l'air, soit de l'éliminer dans des conditions de températures plus basses que celles qui peuvent être mises en oeuvre lors d'un séchage dans un four. Toutefois, rien n'interdit d'envisager, lors de cette étape (d) de séchage sous vide, de chauffer légèrement la suspension formée par le précipité d'oxyde métallique hydraté et le solvant polaire protique organique. Bien entendu, le vide appliqué pour cette étape de séchage est adapté au solvant polaire protique organique choisi et, en particulier, à la valeur de sa tension de vapeur saturante.

Les Inventeurs ont également mis en évidence l'existence d'une réelle synergie se produisant entre le choix du réactif, en l'espèce un composé comprenant un hydroxyde, et celui des étapes (c) de mise en contact et (d) de séchage particulières puisqu'elles permettent d'envisager le séchage de la poudre d'un oxyde métallique hydraté qui ne s'agglomère pas. Or, comme on le verra dans les exemples 1 et 4 ci-après, lorsque l'on fait le choix d'un autre réactif, en l'espèce de l'acide oxalique, les particules de poudre d'oxyde métallique obtenues restent agglomérées entre elles, quelles que soient les conditions de séchage de ladite poudre.

Selon une variante avantageuse du procédé selon l'invention, la poudre de l'oxyde hydraté dudit au moins un métal est formée de particules dont le diamètre moyen est inférieur ou égal à 100 nm, avantageusement inférieur ou égal à 20 nm et, de préférence, inférieur ou égal à 10 nm.

Selon une autre variante avantageuse du procédé selon l'invention, la poudre de l'oxyde hydraté dudit au moins un métal présente une surface spécifique, mesurée selon la méthode BET, supérieure ou égale à 30 m²/g, avantageusement supérieure ou égale à 80 m²/g et, de préférence, supérieure ou égale à 100 m²/g.

Ces valeurs de surface spécifique, qui traduisent la réactivité de la poudre de l'oxyde métallique hydraté, sont bien supérieures à celles d'une poudre d'un oxyde métallique hydraté comparable qui est préparée par la mise en oeuvre des étapes (a) à (c) identiques à celles du procédé selon l'invention, mais avec une étape (d) d'élimination du solvant polaire protique organique opérée par un séchage à l'air.

Selon une autre variante avantageuse du procédé selon l'invention, le procédé comprend en outre, après l'étape (b) et avant l'étape (c), une étape de lavage du précipité de l'oxyde hydraté dudit au moins un métal qui a été séparé, par exemple par filtration ou par centrifugation, lors de l'étape (b).

Ce lavage peut être réalisé par un ou plusieurs passages d'un même solvant ou de différents solvants, ce ou ces solvants étant de préférence des solvants protiques, éventuellement en mélange avec de l'eau.

Ce lavage peut notamment être réalisé par de l'éthanol ou encore par un mélange d'eau et d'éthanol. Lorsque de l'eau est employée pour cette étape de lavage du précipité de l'oxyde métallique hydraté, de l'eau déionisée est, de préférence utilisée.

Selon une autre variante avantageuse du procédé selon l'invention, le procédé comprend en outre, après l'étape (d) :
(e) le traitement thermique de la poudre de l'oxyde hydraté dudit au moins un métal, conduisant à une poudre de l'oxyde anhydre dudit au moins un métal.

Ainsi, lors de cette étape (e), sous l'effet du traitement thermique de la poudre obtenue à l'issue de l'étape (d), se produit la déshydratation complète de l'oxyde métallique hydraté en l'oxyde métallique anhydre correspondant.

Il est précisé qu'une déshydratation partielle de l'oxyde métallique hydraté se produit également lors de l'étape (d) proprement dite, c'est-à-dire lors de l'élimination du solvant polaire protique organique par séchage sous vide.

Comme déjà mentionné précédemment, dans le procédé de préparation d'une poudre d'un oxyde d'au moins un métal selon l'invention, chaque métal a un nombre d'oxydation compris entre (III) et (VI), en particulier de (III), de (IV) et/ou de (VI) et, notamment, de (III) et/ou de (IV).

Selon une variante avantageuse de l'invention, chaque métal est choisi parmi les actinides, les lanthanides et les métaux de transition, ces métaux présentant nécessairement un nombre d'oxydation compris entre (III) et (VI), en particulier de (III), de (IV) et/ou de (VI) et, notamment, de (III) et/ou de (IV).

Lorsque le métal est un actinide, il est avantageusement choisi parmi un élément chimique du groupe constitué par l'uranium U, le thorium Th, le plutonium Pu, le neptunium Np, l'américium Am et le curium Cm.

Lorsque le métal est un lanthanide, il est avantageusement choisi parmi un élément chimique du groupe constitué par le cérium Ce, le gadolinium Gd, le néodyme Nd, le samarium Sm et l'europium Eu.

Lorsque le métal est un métal de transition, il est avantageusement choisi parmi un élément chimique du groupe constitué par le titane Ti, le chrome Cr, le zirconium Zr, le scandium Sc, l'yttrium Y et le hafnium Hf.

A titre d'exemples, le métal peut avantageusement être choisi parmi un élément chimique du groupe constitué par U(IV), U(VI), Th(IV), Pu(III), Pu(IV), Pu(VI), Am(III), Np(IV), Np(VI), Ce(III), Ce(IV), Gd(III), Nd(III) et Zr(IV).

Le procédé selon l'invention se rapporte à la préparation d'une poudre d'un oxyde d'au moins un métal, chaque métal ayant un nombre d'oxydation compris entre (III) et (VI), en particulier de (III), de (IV) et/ou de (VI) et, notamment, de (III) et/ou de (IV).

Ainsi, selon un premier mode de réalisation de l'invention, le procédé permet de préparer une poudre d'un oxyde d'un seul métal, encore appelé oxyde simple. Cette poudre d'un oxyde d'un seul métal peut donc notamment être une poudre d'un oxyde d'actinide, d'un oxyde de lanthanide ou d'un oxyde d'un métal de transition.

Un tel oxyde simple est, de préférence, choisi parmi le dioxyde d'uranium UO_{2+δ}, le trioxyde d'uranium UO₃, l'octaoxyde de triuranium U₃O₈, le dioxyde de cérium CeO_{2-δ}, le dioxyde de thorium ThO₂, le dioxyde de plutonium PuO_{2-δ}, le dioxyde de neptunium NpO_{2+δ}, le dioxyde de zirconium ZrO₂ et le dioxyde de hafnium HfO₂. La valeur de δ est variable en fonction du métal constitutif de l'oxyde considéré. Typiquement, δ est compris entre 0 et 0,5, la valeur de 0 étant comprise et la valeur de 0,5 étant exclue (0≤δ<0,5).

Selon un second mode de réalisation de l'invention, le procédé permet également de préparer une poudre d'un oxyde de deux, trois métaux, voire plus, encore appelé oxyde mixte. Cette poudre d'un oxyde de deux, trois métaux, ou plus, peut donc notamment être une poudre d'un oxyde mixte d'actinides, d'un oxyde mixte de lanthanides ou d'un oxyde mixte de métaux de transition. Elle peut également être une poudre d'un oxyde mixte d'actinide(s) et de lanthanide(s), d'un oxyde mixte d'actinide(s) et d'un(de) métal(aux) de transition, d'un oxyde mixte de lanthanide(s) et d'un(de) métal(aux) de transition, ou encore d'un oxyde mixte d'actinide(s), de lanthanide(s) et d'un(de) métal(aux) de transition.

Un tel oxyde mixte est, de préférence, choisi parmi un oxyde mixte d'uranium et de cérium (U,Ce)O_{2±δ}, un oxyde mixte d'uranium et de plutonium (U,Pu)O_{2±δ}, un oxyde mixte d'uranium et d'américium (U,Am)O_{2±δ}, un oxyde mixte d'uranium et de thorium (U,Th)O_{2+δ}, un oxyde mixte de cérium et de gadolinium (Ce,Gd)O_{2-δ}, un oxyde mixte d'uranium et de gadolinium (U,Gd)O_{2±δ}, un oxyde mixte de thorium et de plutonium (Th,Pu)O_{2-δ}, un oxyde mixte de thorium et d'yttrium (Th,Y)O_{2-δ} et un oxyde mixte d'uranium, de plutonium et d'américium (U,Pu,Am)O_{2±δ}. La valeur de δ est variable en fonction des métaux constitutifs de l'oxyde mixte considéré. Typiquement, δ est compris entre 0 et 0,5, la valeur de 0 étant comprise et la valeur de 0,5 étant exclue (0≤δ<0,5).

Il est précisé qu'à l'issue de l'étape (d), la poudre de l'oxyde dudit au moins un métal qui est obtenue, que cet oxyde soit un oxyde simple ou un oxyde mixte, est une poudre de l'oxyde métallique sous une forme hydratée, couramment notée nH₂O.

Selon une variante avantageuse de l'invention, dans l'étape (a), pour chaque métal, le sel du cation dudit métal est choisi parmi un sulfate, un nitrate, un halogénure, étant précisé que ce cation peut être trivalent, tétravalent, pentavalent et/ou hexavalent. Lorsque ce sel est un halogénure, on peut avantageusement utiliser un chlorure ou un bromure.

Au sens de la présente invention, le composé comprenant un hydroxyde qui utilisé comme réactif dans l'étape (a) du procédé est un composé qui comprend au moins un anion hydroxyde OH⁻ et au moins un cation, de sorte à assurer l'électro-neutralité dudit composé.

A titre d'exemple, le cation du composé comprenant un hydroxyde peut être un ammonium primaire, secondaire ou tertiaire, ou simplement être le cation ammonium NH₄⁺. Le cation peut également être le cation hydrazinium N₂H₅⁺.

Le cation du composé comprenant un hydroxyde peut également être un cation métallique, en particulier un cation d'un métal alcalin, tel que le sodium Na ou le potassium K, ou un cation d'un métal alcalino-terreux, tel que le calcium Ca ou le magnésium Mg.

Le composé comprenant un hydroxyde peut ainsi être choisi parmi l'hydroxyde d'ammonium NH₄OH, l'hydroxyde d'hydrazinium N₂H₅OH, l'hydroxyde de sodium NaOH, l'hydroxyde de potassium KOH, l'hydroxyde de calcium Ca(OH)₂ ou encore l'hydroxyde de magnésium Mg(OH)₂.

Le composé comprenant un hydroxyde peut également provenir d'un composé permettant la formation de l'anion OH⁻ en solution aqueuse. A titre d'exemple, le composé comprenant un cation ammonium NH₄⁺ et un anion hydroxyde OH⁻ peut provenir, soit de l'hydroxyde d'ammonium NH₄OH sous forme de sel, soit du produit de réaction de l'ammoniac NH₃ dans l'eau.

Selon une variante avantageuse de l'invention, dans l'étape (a), le composé comprenant un hydroxyde est l'hydroxyde d'ammonium NH₄OH ou l'hydroxyde d'hydrazinium N₂H₅OH.

Selon une variante avantageuse de l'invention, dans l'étape (a), la teneur molaire en composé comprenant un hydroxyde est en excès par rapport à la teneur molaire totale en cation(s) dudit au moins un métal ayant un nombre d'oxydation compris entre (III) et (VI). Il est précisé que ce ou ces cations sont trivalents, tétravalents, pentavalents et/ou hexavalents, en fonction du nombre d'oxydation dudit métal considéré. Cette teneur molaire en composé comprenant un hydroxyde est avantageusement comprise entre 150% et 600% et, de préférence, entre 300% et 500%, par rapport à la teneur molaire totale en cation(s) dudit au moins un métal.

Selon une variante avantageuse de l'invention, dans l'étape (c), le solvant polaire protique organique est choisi parmi un acide carboxylique, une amine primaire et un alcool.

Lorsque le solvant polaire protique organique est un acide carboxylique, cet acide carboxylique peut notamment être choisi parmi l'acide formique, l'acide acétique et l'acide propanoïque.

Lorsque le solvant polaire protique organique est une amine primaire, cette amine primaire peut notamment être choisie parmi la méthylamine, l'éthylamine et l'isopropylamine.

Lorsque le solvant polaire protique organique est un alcool, cet alcool peut notamment être un monoalcool ou un diol. Un tel alcool est, de préférence, choisi dans le groupe constitué par le méthanol, l'éthanol et l'éthanediol.

Selon une variante avantageuse de l'invention, dans l'étape (d), le séchage sous vide est réalisé au moyen d'une rampe à vide, la rampe à vide permettant à la fois de créer un vide dans l'espace intérieur du ballon, comprenant la suspension formée par le précipité de l'oxyde métallique hydraté et le solvant polaire protique organique, et de rompre ce vide, par l'introduction dans ce même ballon, d'un gaz, en particulier d'un gaz inerte tel que le diazote, l'argon ou l'hélium. De manière alternative, on peut introduire un gaz réducteur.

Pour favoriser l'évaporation du solvant polaire protique organique de la suspension et obtenir la poudre de l'oxyde métallique hydraté sous sa forme la plus sèche possible, il est particulièrement avantageux de chauffer et/ou de maintenir, sous agitation, la suspension formée par le précipité de l'oxyde métallique hydraté et le solvant polaire protique organique.

L'invention se rapporte, en deuxième lieu, à une poudre d'un oxyde d'au moins un métal, chaque métal ayant un nombre d'oxydation compris entre (III) et (VI), en particulier de (III), de (IV) et/ou de (VI) et, notamment, de (III) et/ou de (IV), obtenue par la mise en oeuvre du procédé de préparation tel que défini ci-dessus, les caractéristiques avantageuses de ce procédé pouvant être prises seules ou en combinaison, cette poudre étant formée de particules dont le diamètre moyen est inférieur ou égal à 1 µm et présentant une surface spécifique, mesurée selon la méthode BET, supérieure ou égale à 80 m²/g.

L'invention se rapporte, en troisième lieu, à différentes utilisations d'une telle poudre d'un oxyde d'au moins un métal, chaque métal ayant un nombre d'oxydation compris entre (III) et (VI), en particulier de (III), de (IV) et/ou de (VI) et, notamment, de (III) et/ou de (IV).

Selon l'invention, cette poudre d'un oxyde d'au moins un métal peut être utilisée pour la fabrication de combustible nucléaire.

Selon l'invention, cette poudre d'un oxyde d'au moins un métal peut également être utilisée comme support de catalyse.

Selon l'invention, cette poudre d'un oxyde d'au moins un métal, lorsque ce métal est l'uranium, peut également être utilisée pour la préparation d'octaoxyde de triuranium U₃O₈.

Selon l'invention, cette poudre d'un oxyde d'au moins un métal peut également être utilisée dans un procédé d'hydrofluoration.

Selon l'invention, cette poudre d'un oxyde d'au moins un métal peut également être utilisée pour la fabrication d'un conducteur ionique, tel qu'un électrolyte solide pour pile à combustible à oxyde solide (en anglais, Solid Oxide Fuel Cell et abrégé SOFC) ou une sonde de mesure d'oxygène.

Selon l'invention, cette poudre d'un oxyde d'au moins un métal peut également être utilisée pour la fabrication d'une céramique. Une telle céramique, également appelée "céramique oxyde", peut notamment être utilisée comme pastille de combustible nucléaire ou comme conducteur ionique, ce conducteur ionique pouvant être un électrolyte solide pour pile SOFC ou une sonde de mesure d'oxygène, comme mentionné précédemment.

L'invention se rapporte, en quatrième lieu, à un procédé de fabrication d'une pastille d'un oxyde d'au moins un métal, chaque métal ayant un nombre d'oxydation compris entre (III) et (VI), en particulier de (III), de (IV) et/ou de (VI) et, notamment, de (III) et/ou (IV).

Selon l'invention, ce procédé comprend successivement et dans cet ordre :
(1) la préparation d'une poudre d'un oxyde d'au moins un métal, chaque métal ayant un nombre d'oxydation compris entre (III) et (VI), par la mise en oeuvre du procédé tel que défini ci-dessus, les caractéristiques avantageuses de ce procédé pouvant être prises seules ou en combinaison,
(2) le compactage de la poudre, et
(3) le traitement thermique de la poudre compactée, conduisant à la pastille de l'oxyde d'au moins un métal.

En d'autres termes, le procédé de fabrication d'une pastille d'un oxyde d'au moins un métal, chaque métal ayant un nombre d'oxydation compris entre (III) et (VI), comprend successivement et dans cet ordre :
(a) la réaction, avec un composé comprenant un hydroxyde, d'une solution aqueuse comprenant, pour chaque métal, au moins un sel du cation dudit métal, conduisant à un précipité de l'oxyde hydraté dudit au moins un métal,
(b) la séparation du précipité obtenu,
(c) la mise en contact du précipité séparé avec un solvant polaire protique organique,
(d) l'élimination du solvant polaire protique organique par séchage sous vide du précipité, conduisant à une poudre de l'oxyde hydraté dudit au moins un métal, ladite poudre étant formée de particules dont le diamètre moyen est inférieur ou égal à 1 µm,
(e) le compactage de la poudre, et
(f) le traitement thermique de la poudre compactée, conduisant à la pastille de l'oxyde d'au moins un métal.

Le procédé selon l'invention permet donc d'obtenir une pastille d'un oxyde métallique présentant une densité élevée et ce, en un nombre particulièrement restreint d'étapes, contrairement aux procédés de l'art antérieur tels que ceux décrits dans les documents **[1]** à **[3].**

En outre, cette pastille d'un oxyde métallique telle qu'obtenue selon le procédé selon l'invention présente une très bonne tenue mécanique, ce qui constitue un avantage indéniable pour la manipulation ultérieure d'une telle pastille.

Selon une variante avantageuse du procédé selon l'invention, la pastille d'un oxyde d'au moins un métal présente une densité d'au moins 90% et, avantageusement, d'au moins 95%.

Selon une autre variante avantageuse du procédé selon l'invention, l'étape (3), ou (f), de traitement thermique est réalisée par application d'un gradient de températures s'étendant de la température ambiante jusqu'à une température inférieure ou égale à 1600°C et, avantageusement, inférieure ou égale à 1400°C. On obtient ainsi le frittage des particules de la pastille compactée.

Il est important de souligner que cette température maximale appliquée lors de cette étape (3), ou (f), pour obtenir le frittage de la poudre compactée, et préalablement préparée par le procédé selon l'invention, est inférieure d'au moins 100°C, voire inférieure d'au moins 300°C, à celle qui est nécessaire pour obtenir le frittage d'une poudre compactée mais préparée selon les procédés de l'art antérieur. Le procédé de fabrication d'une pastille d'un oxyde d'au moins un métal selon l'invention présente donc un avantage indéniable du fait de la réduction supplémentaire des besoins en énergie thermique, qui s'ajoute à ceux précédemment mentionnés, qui sont liés au procédé de préparation d'une poudre d'oxyde d'au moins un métal, tels que la limitation drastique du nombre d'étapes.

La pastille d'un oxyde d'au moins un métal, chaque métal ayant un nombre d'oxydation compris entre (III) et (VI), qui est obtenue par la mise en oeuvre du procédé de fabrication tel que défini ci-dessus et dont les caractéristiques avantageuses peuvent être prises seules ou en combinaison, peut être une pastille de combustible nucléaire ou de conducteur ionique. Ce conducteur ionique peut notamment être un électrolyte solide pour pile à combustible à oxyde solide (SOFC) ou une sonde de mesure d'oxygène, comme mentionné précédemment.

D'autres caractéristiques et avantages de l'invention apparaîtront mieux à la lecture du complément de description qui suit et qui se rapporte à des exemples de synthèse d'oxydes métalliques selon l'invention, de tels oxydes pouvant être des oxydes simples ou mixtes, hydratés et/ou anhydres.

Bien entendu, ces exemples ne sont donnés qu'à titre d'illustrations de l'objet de l'invention et ne constituent en aucun cas une limitation de cet objet.

### BRÈVE DESCRIPTION DES DESSINS

La figure 1 correspond à un cliché réalisé au moyen d'un microscope électronique à balayage (MEB) de la poudre de référence de l'exemple 1.
Les figures 2A et 2B correspondent à des clichés réalisés respectivement au moyen d'un microscope électronique à balayage (figure 2A) et d'un microscope électronique à transmission (figure 2B) de la poudre selon l'invention de l'exemple 1.
La figure 3 représente un diffractogramme, obtenu par la technique de diffractométrie de rayons X (DRX), traduisant l'évolution de l'intensité des rayons X diffractés telle que détectée (notée I et exprimée en unité arbitraire ua) en fonction de l'angle de diffraction deux-thêta du faisceau desdits rayons X (noté 2θ et exprimé en °), pour la poudre selon l'invention de l'exemple 1.
La figure 4 représente les diffractogrammes en température tels qu'obtenus entre 30 et 1100°C par la technique de diffractométrie de rayons X (DRX), traduisant l'évolution de l'intensité des rayons X diffractés telle que détectée (notée I et exprimée en unité arbitraire ua) en fonction de l'angle de diffraction deux-thêta du faisceau desdits rayons X (noté 2θ et exprimé en °), pour la poudre selon l'invention de l'exemple 1.
La figure 5 illustre la courbe traduisant l'évolution de la perte de masse relative (notée Δm et exprimée en %) d'un échantillon de poudre d'oxyde d'uranium(IV) hydraté selon l'invention de l'exemple 1, en fonction de la température appliquée (notée T et exprimée en °C).
La figure 6 illustre la courbe traduisant l'évolution du retrait linéaire relatif (noté ΔL/L₀ et exprimé en %) d'une pastille de référence ainsi que d'une pastille obtenue après compactage de la poudre d'oxyde d'uranium(IV) hydraté selon l'invention de l'exemple 1 en fonction de la température appliquée (notée T et exprimée en °C).
La figure 7 correspond à un cliché pris au moyen d'un microscope électronique à balayage de la pastille selon l'invention de l'exemple 1, après frittage.
La figure 8 correspond à un cliché pris au moyen d'un microscope électronique à balayage (MEB) de la poudre selon l'invention de l'exemple 2.
La figure 9 représente un diffractogramme, obtenu par la technique de diffractométrie de rayons X (DRX), traduisant l'évolution de l'intensité des rayons X diffractés telle que détectée (notée I et exprimée en unité arbitraire ua) en fonction de l'angle de diffraction deux-thêta du faisceau desdits rayons X (noté 2θ et exprimé en °), pour la poudre selon l'invention de l'exemple 2.
Les figures 10A, 10B et 10C correspondent aux clichés pris au moyen d'un microscope électronique à balayage (MEB) des poudres selon l'invention respectivement obtenues à partir des mélanges A, B et C, et en présence d'éthanol comme solvant, de l'exemple 4.
La figure 10D correspond au cliché pris au moyen d'un microscope électronique à balayage (MEB) de la poudre comparative, obtenue à partir du mélange A, et en présence d'eau comme solvant, de l'exemple 4.
La figure 11 représente les diffractogrammes, obtenus par la technique de diffractométrie de rayons X (DRX), traduisant l'évolution de l'intensité des rayons X diffractés telle que détectée (notée I et exprimée en unité arbitraire ua) en fonction de l'angle de diffraction deux-thêta du faisceau desdits rayons X (noté 2θ et exprimé en °), pour les poudres respectivement obtenues à partir des mélanges A, B et C de l'exemple 4.
La figure 12 illustre les courbes traduisant l'évolution du retrait linéaire relatif (noté ΔL/L₀ et exprimé en %) d'une pastille de référence ainsi que de chacune des pastilles obtenues après compactage des poudres d'oxydes mixtes d'uranium(IV) et de cérium(IV) selon l'invention de l'exemple 4, en fonction de la température appliquée (notée T et exprimée en °C) et du temps (noté t et exprimé en heures).
La figure 13 correspond à un cliché pris au moyen d'un microscope électronique à balayage de la pastille selon l'invention de l'exemple 4 et obtenue à partir du mélange A (x=0,1), après frittage.
La figure 14 correspond à un cliché pris au moyen d'un microscope électronique à balayage (MEB) de la poudre selon l'invention de l'exemple 5.
La figure 15 représente un diffractogramme, obtenu par la technique de diffractométrie de rayons X (DRX), traduisant l'évolution de l'intensité des rayons X diffractés telle que détectée (notée I et exprimée en unité arbitraire ua) en fonction de l'angle de diffraction deux-thêta du faisceau desdits rayons X (noté 2θ et exprimé en °), pour la poudre selon l'invention de l'exemple 5.
La figure 16 correspond à un cliché pris au moyen d'un microscope électronique à balayage (MEB) de la poudre selon l'invention de l'exemple 6.
La figure 17 représente un diffractogramme, obtenu par la technique de diffractométrie de rayons X (DRX), traduisant l'évolution de l'intensité des rayons X diffractés telle que détectée (notée I et exprimée en unité arbitraire ua) en fonction de l'angle de diffraction deux-thêta du faisceau desdits rayons X (noté 2θ et exprimé en °), pour la poudre selon l'invention de l'exemple 6.

### EXPOSÉ DÉTAILLÉ DE MODES DE RÉALISATION PARTICULIERS

### Exemple 1 : Synthèse des oxydes d'uranium(IV) hydraté et anhydre

### Préparation d'une solution aqueuse comprenant un chlorure d'uranium(IV)

Pour la synthèse de l'oxyde d'uranium(IV) hydraté puis de l'oxyde d'uranium(IV) anhydre, une solution aqueuse comprenant du chlorure d'uranium a été préparée à partir d'uranium métal U⁰.

Pour ce faire, des copeaux d'uranium métal ont été nettoyés avec de l'acide chlorhydrique à une concentration molaire de 2 mol/l afin d'éliminer la couche d'oxyde les recouvrant. Les copeaux d'uranium U⁰ ainsi nettoyés ont ensuite été introduits dans une solution d'acide chlorhydrique à une concentration molaire de 6 mol/l. Cette introduction a été réalisée en introduisant, un par un, lesdits copeaux pour éviter l'emballement de la réaction.

Après dissolution desdits copeaux dans la solution d'acide chlorhydrique, on obtient une solution aqueuse comprenant du chlorure d'uranium(IV) dont on sépare les fines par centrifugation.

Cette solution aqueuse comprenant du chlorure d'uranium(IV) ainsi obtenue est titrée par un dosage colorimétrique ainsi que par spectrométrie d'émission atomique par plasma à couplage inductif (en anglais, Inductively Coupled Plasma - Atomic Emission Spectrometry et abrégé ICP-AES).

### Synthèse de l'oxyde d'uranium(IV) hydraté

La synthèse de l'oxyde d'uranium(IV) hydraté a été réalisée par addition, à la solution aqueuse de chlorure d'uranium(IV) telle que préparée ci-dessus, d'hydroxyde d'ammonium à une teneur molaire de 400% par rapport à la teneur molaire en chlorure d'uranium dans la solution aqueuse. Cette addition a été réalisée à température ambiante et sous agitation, à une vitesse de 500 tr/min. L'agitation a été maintenue pendant une durée d'une heure.

Au terme de cette heure, on a obtenu un précipité. Après filtration du précipité, l'analyse par ICP-AES du filtrat montre une précipitation quantitative de l'uranium avec un rendement de précipitation supérieur ou égal à 99,9%.

Après plusieurs lavages à l'eau déionisée, puis à l'éthanol, permettant d'éliminer toute trace d'acide résiduel, le précipité est séparé de la phase liquide par centrifugation à une vitesse de 4000 tr/min. Le précipité ainsi obtenu est divisé en deux fractions.

La première fraction du précipité est alors soumise à un séchage à l'air, pendant 24 heures, à température ambiante et sous pression atmosphérique. La poudre telle qu'obtenue après cette étape de séchage à l'air a été analysée.

La surface spécifique telle que mesurée selon la méthode BET, par adsorption d'azote à la température d'ébullition de l'azote liquide (-196°C), est de l'ordre de 30 m²/g.

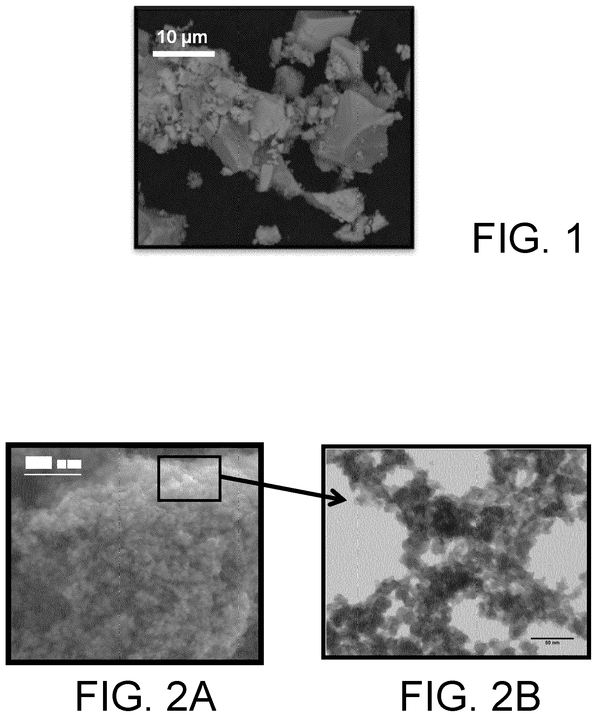

Une étude morphologique de cette poudre a également été réalisée par microscopie électronique à balayage (MEB). Le cliché correspondant, qui est illustré à la figure 1, montre que les particules formant la poudre sont fortement agglomérées.

La seconde fraction du précipité est, quant-à-elle, introduite dans un ballon avec de l'éthanol.

Pour permettre l'évaporation rapide et à faible température de l'éthanol présent dans le précipité, le ballon est placé sous un vide dynamique inférieur à 100 Pa (1 mbar), au moyen d'une rampe à vide. Le précipité est simultanément agité à une vitesse de 500 tr/min, à une température de 40°C.

A l'issue de cette étape d'évaporation de l'éthanol, on obtient une poudre. L'agitation de cette poudre est maintenue pendant 5 minutes puis le vide est cassé par introduction de diazote N₂, dans le ballon, au moyen de la rampe à vide, pour éviter l'oxydation de l'uranium(IV).

Cette poudre telle qu'obtenue après l'étape de séchage sous vide de la seconde fraction du précipité a été analysée.

La surface spécifique telle que mesurée selon la méthode BET, par adsorption d'azote à la température d'ébullition de l'azote liquide (-196°C), est de l'ordre de 150 m²/g. Cette valeur, qui correspond à une grande surface spécifique, traduit une forte réactivité de la poudre ainsi obtenue, réactivité nettement supérieure à la poudre obtenue par séchage à l'air.

Une étude morphologique de cette poudre séchée sous vide a également été réalisée par microscopie électronique à balayage (MEB). Le cliché correspondant, qui est illustré à la figure 2A, montre que cette poudre ne s'agglomère pas et qu'elle se compose de particules de taille nanométrique. Ce constat est, par ailleurs, confirmé par le cliché réalisé par microscopie électronique à transmission (MET) et qui est illustré à la figure 2B. En effet, ce cliché de la figure 2B met en évidence la présence de particules de l'ordre de la dizaine de nanomètres.

A l'issue de cette étape de séchage sous vide réalisée sur la seconde fraction du précipité, on obtient une poudre qui ne forme pas d'agrégats et qui présente une réactivité fortement augmentée par rapport à celle de la poudre qui est obtenue lorsque l'on procède au séchage à l'air de ce même précipité.

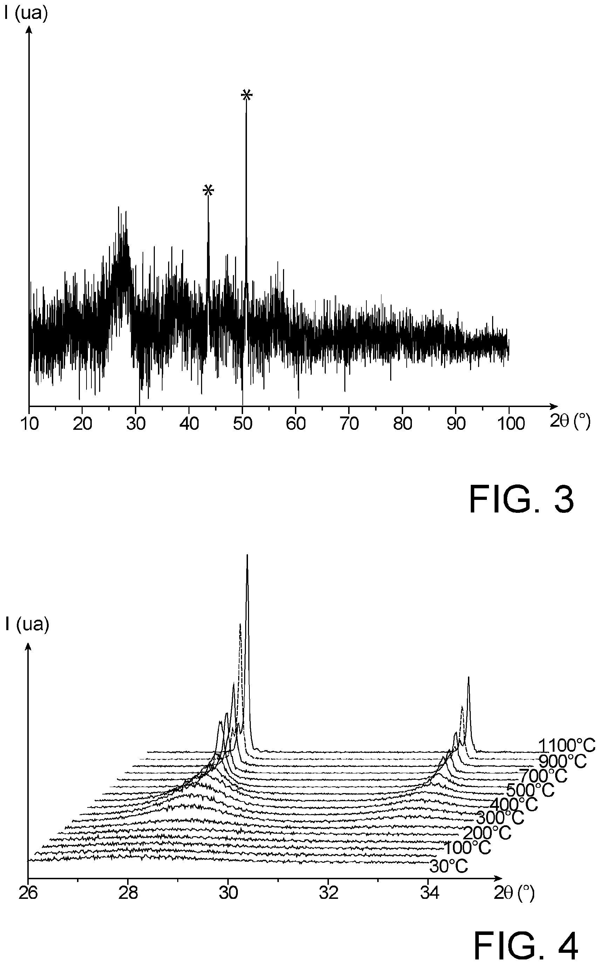

Pour déterminer la structure des particules de cette poudre séchée sous vide, une analyse par diffractométrie de rayons X (DRX) a été réalisée. Le diffractogramme correspondant est illustré à la figure 3, étant précisé que les deux plus grands pics situés aux valeurs d'angle 2θ d'environ 43,5° et 50,5°, et repérés par une étoile (*), correspondent à l'intensité des rayons X diffractés par le support de l'échantillon de poudre.

On observe que le diffractogramme ainsi obtenu suggère une structure cristallographique cubique à faces centrées du type fluorine, de groupe d'espace *Fm-3m,* qui est caractéristique des dioxydes d'actinides. Par ailleurs, ce diffractogramme met également en évidence une faible cristallinité présentée par les particules formant la poudre.

Une analyse complémentaire par spectrométrie Raman met en évidence l'absence de la bande de vibration caractéristique des groupements OH et confirme la présence d'un oxyde hydraté.

Ces analyses par DRX et par spectrométrie Raman permettent d'expliquer les phénomènes réactionnels qui se produisent lors de la réaction du chlorure d'uranium avec l'hydroxyde d'ammonium.

En effet, au contact de l'hydroxyde d'ammonium, les cations U⁴⁺ présents dans la solution aqueuse de chlorure d'uranium précipitent sous la forme d'un hydroxyde d'uranium(IV), conformément à la réaction chimique (1) suivante :

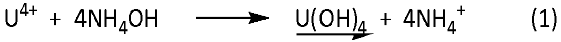

Or, ce précipité d'hydroxyde d'uranium(IV) U(OH)₄ est un composé très réactif qui évolue spontanément vers la formation d'un oxyde d'uranium(IV) hydraté, selon la réaction chimique (2) suivante :

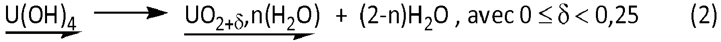

### Traitements thermiques de l'oxyde d'uranium(IV) hydraté

* Dans un premier traitement thermique, il a été procédé au suivi de l'évolution de la cristallinité de la poudre d'oxyde d'uranium(IV) hydraté en fonction de la température. Ce traitement thermique a été réalisé *in situ,* sous atmosphère inerte, en présence de diazote, par application d'un gradient de températures croissant de 30°C jusqu'à 1100°C.

Les diffractogrammes ainsi obtenus et illustrés à la figure 4 montrent que la structure cristallographique cubique à faces centrées du type fluorine est conservée au cours de ce premier traitement thermique, et que la cristallinité de la poudre s'améliore nettement à partir d'une température appliquée de 600°C.

* Lors d'un second traitement thermique, on a procédé à la déshydratation complète de la poudre d'oxyde d'uranium(IV) hydraté, sous atmosphère inerte, plus précisément sous argon.

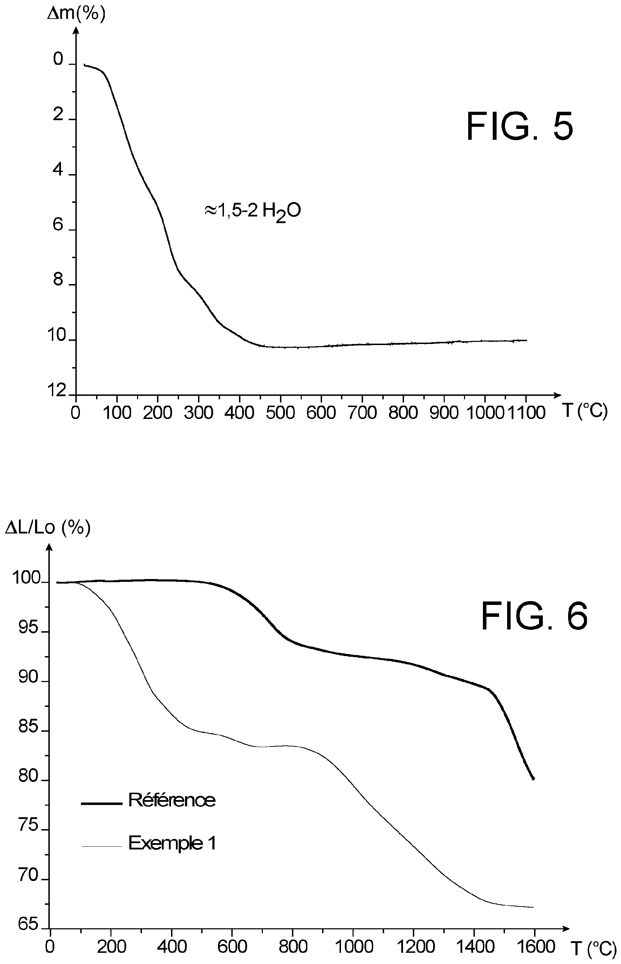

Cette déshydratation a été suivie par analyse thermogravimétrique afin d'observer l'évolution de la masse de l'échantillon de poudre d'oxyde d'uranium(IV) hydraté en fonction de la température appliquée. La courbe correspondante est illustrée à la figure 5.

En se reportant sur cette figure 5, on observe que la déshydratation de la poudre se produit en une seule étape qui s'achève vers une température de l'ordre de 450°C. A partir de cette valeur de température, on a atteint la valeur maximale de perte de masse relative. Cette valeur, qui est de l'ordre de 10%, correspond à la déshydratation complète de l'oxyde d'uranium(IV) hydraté en oxyde d'uranium(IV) anhydre. Cette perte de masse relative observée sur la courbe de la figure 5 correspond à une perte de 1,5 à 2 molécules d'eau.

### Compactage de l'oxyde d'uranium(IV) hydraté

La poudre d'oxyde d'uranium(IV) hydraté telle qu'obtenue après l'étape de séchage sous vide est compactée par un pressage uniaxial à une pression de 500 MPa. Ce compactage, également dénommé "pastillage", a permis d'obtenir une pastille à cru qui présente une densité comprise entre 40% et 45%.

### Densification de l'oxyde d'uranium(IV) hydraté

Un suivi du retrait linéaire de cette pastille compactée a été effectué par dilatométrie en fonction de la température. La courbe correspondante obtenue est illustrée sur la figure 6.

Cette courbe de la figure 6 présente deux parties, une première partie s'étendant de la température ambiante jusqu'à une température d'environ 800°C, qui correspond à l'intervalle de températures dans lequel se produit la déshydratation de l'oxyde d'uranium(IV) hydraté en oxyde d'uranium(IV) anhydre, ainsi qu'une seconde partie, s'étendant de 800°C environ jusqu'à environ 1600°C, qui correspond à l'intervalle de températures dans lequel se produit le frittage des particules d'oxyde d'uranium(IV) anhydre formant la pastille.

A titre de comparaison, on a reporté sur cette même figure 6, la courbe de retrait linéaire d'une pastille de référence compactée selon les mêmes conditions que la pastille précédente, mais réalisée à partir d'une poudre préparée par le procédé décrit dans la publication de N.Hingant et al. ("Preparation, sintering and leaching of optimized uranium thorium dioxides", Journal of Nuclear materials, 385 (2009), 400-406), ci-après référencée **[5].**

Il est précisé que la poudre obtenue selon le procédé du document **[5]** présente des particules d'environ 1 µm, étant précisé que ces particules telles qu'obtenues à l'issue de ce procédé sont agglomérées sous la forme de plaquettes carrées d'environ 5 µm à 10 µm de côté. Ce phénomène d'agglomération se produit aussi bien avant qu'après séchage, que l'étape de séchage soit réalisée à l'air, ou même selon les caractéristiques des étapes (c) et (d) du procédé de préparation selon l'invention.

On observe donc que la vitesse de retrait linéaire maximale est obtenue à une température supérieure ou égale à 1600°C avec la pastille de référence tandis qu'elle est atteinte à une température de l'ordre de 1200°C avec une pastille obtenue selon le procédé de l'invention, soit avec un gain de l'ordre de 400°C.

Des mesures géométriques ont permis de caractériser la pastille obtenue conformément au procédé selon l'invention, au terme de l'analyse par dilatométrie. De telles mesures géométriques indiquent que le matériau obtenu est un matériau dense, présentant une densité de 95%.

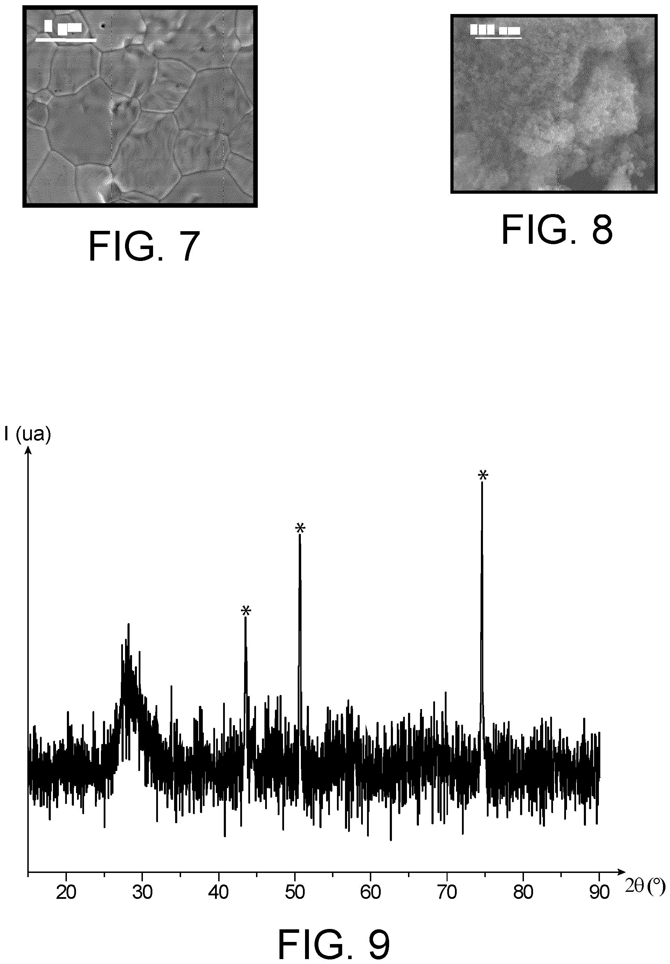

Ce constat est confirmé par le cliché micrographique (MEB) de la figure 7 de cette même pastille obtenue après traitement thermique. Ce cliché met clairement en évidence que le matériau obtenu après frittage de la pastille d'oxyde d'uranium anhydre est particulièrement dense.

### Exemple 2 : Synthèse de l'oxyde de cérium(IV) hydraté

### Préparation d'une solution aqueuse comprenant un sulfate de cérium(IV)

Pour la synthèse de l'oxyde de cérium(IV) hydraté, une solution aqueuse comprenant du sulfate de cérium(IV) a été préparée par dissolution de sulfate de cérium hydraté dans de l'eau déionisée puis dilution, toujours dans de l'eau déionisée, pour atteindre la concentration voulue.

Pour minimiser les erreurs liées au caractère hygroscopique du sulfate de cérium(IV), cette solution aqueuse comprenant du sulfate de cérium(IV) est titrée par spectrométrie d'émission atomique par plasma à couplage inductif (ICP-AES).

### Synthèse de l'oxyde de cérium(IV) hydraté

La synthèse de l'oxyde de cérium(IV) hydraté a été réalisée par addition, à la solution aqueuse de sulfate de cérium telle que préparée ci-dessus, d'hydroxyde d'ammonium à une teneur molaire de 400% par rapport à la teneur molaire en sulfate de cérium(IV) dans la solution aqueuse. Cette addition a été réalisée à température ambiante et sous agitation, à une vitesse de 500 tr/min. L'agitation a été maintenue pendant une durée d'une heure.

Au terme de cette heure, on a obtenu un précipité. Après filtration du précipité, l'analyse par ICP-AES du filtrat montre une précipitation quantitative du cérium avec un rendement de précipitation supérieur ou égal à 99,9%.

Après plusieurs lavages à l'eau déionisée, puis à l'éthanol, permettant d'éliminer toute trace d'acide résiduel, le précipité est séparé de la phase liquide par centrifugation à une vitesse de 4000 tr/min.

Le précipité ainsi obtenu est ensuite introduit dans un ballon avec de l'éthanol. Le ballon comprenant le précipité et l'éthanol est alors placé sous un vide dynamique inférieur à 100 Pa (1 mbar) au moyen d'une rampe à vide. Le précipité est agité à une vitesse de 500 tr/min, à une température de 40°C pour permettre l'évaporation de l'éthanol.

A l'issue de cette étape d'évaporation de l'éthanol, on obtient une poudre. L'agitation de cette poudre est maintenue pendant 5 minutes puis le vide est cassé.

Cette poudre telle qu'obtenue après l'étape de séchage sous vide du précipité a été analysée.

La surface spécifique telle que mesurée selon la méthode BET, par adsorption d'azote à la température d'ébullition de l'azote liquide (-196°C), est de l'ordre de 120 m²/g, valeur qui correspond à une surface spécifique importante et qui traduit une forte réactivité de la poudre ainsi obtenue.

Une étude morphologique de cette poudre a également été réalisée par microscopie électronique à balayage (MEB). Le cliché correspondant, qui est illustré à la figure 8, montre que cette poudre ne s'agglomère pas et qu'elle se compose de particules de taille nanométrique.

Pour déterminer la structure des particules de la poudre obtenue à partir du précipité, une analyse par diffractométrie de rayons X (DRX) a été effectuée. Le diffractogramme correspondant est illustré à la figure 9, étant précisé que les trois plus grands pics situés aux valeurs d'angle 2θ d'environ 43°, 50° et 75°, et repérés par une étoile (*), correspondent à l'intensité des rayons X diffractés par le support de l'échantillon de poudre.

On observe que le diffractogramme ainsi obtenu révèle une structure cristallographique cubique à faces centrées du type fluorine, de groupe d'espace *Fm-3m,* qui est caractéristique du dioxyde de cérium. Par ailleurs, ce diffractogramme met également en évidence une faible cristallinité présentée par les particules formant la poudre.

Une analyse complémentaire par spectrométrie Raman met en évidence l'absence de la bande de vibration caractéristique des groupements OH et confirme la présence d'un oxyde hydraté.

Ces analyses par DRX et par spectrométrie Raman permettent d'expliquer les phénomènes réactionnels qui se produisent lors de la réaction du sulfate de cérium avec l'hydroxyde d'ammonium.

En effet, au contact de l'hydroxyde d'ammonium, les cations Ce⁴⁺ présents dans la solution aqueuse de sulfate de cérium(IV) précipitent sous la forme d'un hydroxyde de cérium(IV), conformément à la réaction chimique (3) suivante :

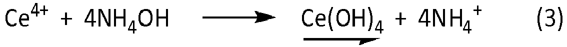

Or, ce précipité d'hydroxyde de cérium(IV) Ce(OH)₄ est un composé très réactif qui évolue spontanément vers la formation d'un oxyde de cérium(IV) hydraté, selon la réaction chimique (4) suivante :

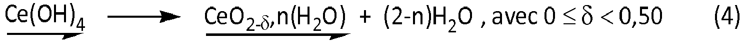

### Exemple 3 : Synthèse de l'oxyde de thorium(IV) hydraté

### Préparation d'une solution aqueuse comprenant un nitrate de thorium(IV)

Pour la synthèse de l'oxyde de thorium(IV) hydraté, une solution aqueuse comprenant du nitrate de thorium(IV) a été préparée par dissolution de nitrate de thorium hydraté dans de l'acide chlorhydrique à une concentration molaire de 6 mol/l.

Pour minimiser les erreurs liées au caractère hygroscopique du nitrate de thorium(IV), cette solution aqueuse comprenant du nitrate de thorium(IV) est titrée par spectrométrie d'émission atomique par plasma à couplage inductif (ICP-AES).

### Synthèse de l'oxyde de thorium(IV) hydraté

La synthèse de l'oxyde de thorium(IV) hydraté a été réalisée par addition, à la solution aqueuse de nitrate de thorium telle que préparée ci-dessus, d'hydroxyde d'ammonium à une teneur molaire de 400% par rapport à la teneur molaire en nitrate de thorium(IV) dans la solution aqueuse. Cette addition a été réalisée à température ambiante et sous agitation, à une vitesse de 500 tr/min. L'agitation a été maintenue pendant une durée d'une heure.

Au terme de cette heure, on a obtenu un précipité. Après filtration du précipité, l'analyse par ICP-AES du filtrat montre une précipitation quantitative du thorium avec un rendement de précipitation supérieur ou égal à 99,9%.

Après plusieurs lavages à l'eau déionisée, puis à l'éthanol, permettant d'éliminer toute trace d'acide résiduel, le précipité est séparé de la phase liquide par centrifugation à une vitesse de 4000 tr/min.

Le précipité ainsi obtenu est ensuite introduit dans un ballon avec de l'éthanol. Le ballon comprenant le précipité et l'éthanol est alors placé sous un vide dynamique inférieur à 100 Pa (1 mbar) au moyen d'une rampe à vide. Le précipité est agité à une vitesse de 500 tr/min, à une température de 40°C pour permettre l'évaporation de l'éthanol.

A l'issue de cette étape d'évaporation de l'éthanol, on obtient une poudre. L'agitation de cette poudre est maintenue pendant 5 minutes puis le vide est cassé.

Cette poudre telle qu'obtenue après l'étape de séchage sous vide du précipité a été analysée.

La surface spécifique telle que mesurée selon la méthode BET, par adsorption d'azote à la température d'ébullition de l'azote liquide (-196°C), est supérieure à 150 m²/g, valeur qui correspond à une surface spécifique très importante et qui traduit une très forte réactivité de la poudre ainsi obtenue.

Comme dans le cas des poudres des exemples 1 et 2 telles qu'obtenues par le procédé selon l'invention, des analyses complémentaires montrent que la poudre obtenue est de l'oxyde de thorium(IV) hydraté.

En effet, au contact de l'hydroxyde d'ammonium, les cations Th⁴⁺ présents dans la solution aqueuse de nitrate de thorium(IV) précipitent sous la forme d'un hydroxyde de thorium(IV), conformément à la réaction chimique (5) suivante :

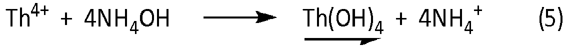

Or, ce précipité d'hydroxyde de thorium(IV) Th(OH)₄ est un composé très réactif qui évolue spontanément vers la formation d'un oxyde de thorium(IV) hydraté, selon la réaction chimique (6) suivante :

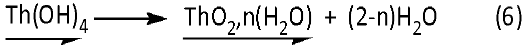

### Exemple 4 : Synthèse d'oxydes mixtes d'uranium(IV) et de cérium(IV) hydratés et anhydres

### Préparation des solutions aqueuses

Une solution aqueuse comprenant du chlorure d'uranium(IV) a été préparée par dissolution d'uranium métal U⁰ dans de l'acide chlorhydrique (6M), comme dans l'exemple 1.

Une solution aqueuse comprenant du sulfate de cérium(IV) a été préparée par dissolution de sulfate de cérium hydraté dans de l'eau déionisée puis dilution, toujours dans de l'eau déionisée, pour atteindre la concentration voulue, comme dans l'exemple 2.

Comme précédemment, chacune de ces solutions aqueuses a été titrée par un dosage colorimétrique et par ICP-AES.

### Synthèse d'oxydes mixtes d'uranium(IV) et de cérium(IV) hydratés

Trois mélanges, notés A, B et C, ont été réalisés à partir des solutions aqueuses telles que préparées à l'étape précédente, dans les stoechiométries en éléments cérium et uranium, respectivement notées x et (1-x), telles que reportées dans le tableau 1 ci-dessous.

**Tableau 1**

| Mélanges | A | B | C |
|---|---|---|---|
| x, [Ce⁴⁺] | 0,1 | 0,2 | 0,45 |
| (1-x), [U⁴⁺] | 0,9 | 0,8 | 0,55 |

La synthèse des oxydes mixtes d'uranium(IV) et de cérium(IV) hydratés a été réalisée par addition, à chacun des mélanges A à C tels que préparés ci-dessus, d'hydroxyde d'ammonium à une teneur molaire de 400% par rapport à la somme des teneurs molaires en chlorure d'uranium(IV) et en sulfate de cérium(IV) présents dans les mélanges A à C. Dans les trois essais, l'addition d'hydroxyde d'ammonium a été réalisée à température ambiante et sous agitation, à une vitesse de 500 tr/min. L'agitation a été maintenue pendant une durée d'une heure.

Au terme de cette heure, on a obtenu des précipités. Après filtration de ces précipités, les analyses par ICP-AES de chacun des filtrats montrent une précipitation quantitative de l'uranium et du cérium avec des rendements de précipitation supérieurs ou égaux à 99,9%.

Après plusieurs lavages à l'eau déionisée, puis à l'éthanol, permettant d'éliminer toute trace d'acide résiduel, chacun des précipités est séparé de la phase liquide par centrifugation à une vitesse de 4000 tr/min.

Chacun des précipités ainsi séparé est alors mis en contact avec un solvant qui est, soit l'éthanol, soit l'eau.

Pour ce faire, chaque précipité ainsi obtenu est introduit dans un ballon avec le solvant considéré. Le ballon comprenant le précipité et le solvant est alors placé sous un vide dynamique inférieur à 100 Pa (1 mbar) au moyen d'une rampe à vide. Le précipité est agité à une vitesse de 500 tr/min, à une température de 40°C pour permettre l'évaporation du solvant.

A l'issue de cette étape d'évaporation du solvant, on obtient une poudre. L'agitation de cette poudre est maintenue pendant 5 minutes puis le vide est cassé par introduction de diazote N₂, dans le ballon, au moyen de la rampe à vide, pour éviter l'oxydation de l'uranium(IV).

Les poudres telles qu'obtenues après l'étape de séchage sous vide de chacun des précipités ont été analysées.

Les surfaces spécifiques telles que mesurées selon la méthode BET, par adsorption d'azote à la température d'ébullition de l'azote liquide (-196°C), pour chacune des poudres, se situent dans un intervalle de valeurs comprises entre 100 m²/g et 150 m²/g dans le cas où le solvant, avec lequel chacun des précipités a été mis en contact, est l'éthanol. De telles valeurs, qui caractérisent une grande surface spécifique, traduisent une forte réactivité des poudres conformes à l'invention, obtenues à partir des mélanges A à C.

Or, on observe que, dans le cas où l'eau a été utilisée comme solvant, ces mêmes valeurs de surfaces spécifiques sont inférieures aux précédentes puisqu'elles se situent dans un intervalle compris entre 10 m²/g et 30 m²/g.

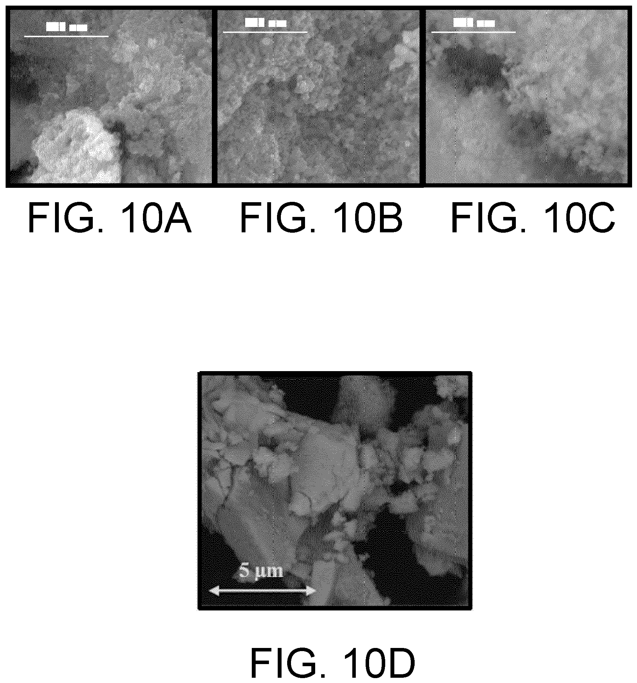

Une étude morphologique des trois poudres selon l'invention, obtenues après mise en contact avec l'éthanol comme solvant, a également été réalisée par microscopie électronique à balayage (MEB). Les clichés correspondants, qui sont illustrés aux figures 10A, 10B et 10C, montrent que les trois poudres ne s'agglomèrent pas et qu'elles se composent de particules de taille nanométrique.

A titre de comparaison, le cliché de la figure 10D de la poudre comparative obtenue à partir du mélange A, mais après mise en contact avec l'eau comme solvant, montre une poudre agglomérée, composée d'agglomérats de taille micrométrique.

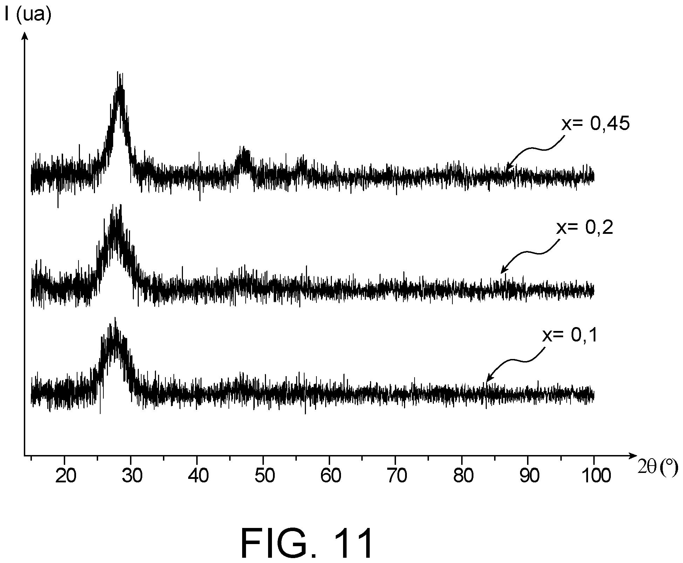

Pour déterminer la structure des particules des trois poudres conformes à l'invention, des analyses par diffractométrie de rayons X (DRX) ont été réalisées. Les diffractogrammes correspondants sont illustrés à la figure 11.

On observe que les diffractogrammes de la figure 11 révèlent tous la présence d'un solide présentant une structure cristallographique cubique à faces centrées du type fluorine, de groupe d'espace *Fm-3m,* qui est caractéristique des dioxydes mixtes d'actinides. Par ailleurs, ces diffractogrammes mettent également en évidence une faible cristallinité présentée par les particules formant ces trois poudres.

Des analyses complémentaires par spectrométrie Raman mettent en évidence l'absence de la bande de vibration caractéristique des groupements OH et confirment la présence d'un oxyde mixte hydraté.

Ces analyses par DRX et par spectrométrie Raman permettent d'expliquer les phénomènes réactionnels qui se produisent lors de la réaction du chlorure d'uranium(IV) et du sulfate de cérium(IV) avec l'hydroxyde d'ammonium.

En effet, au contact de l'hydroxyde d'ammonium, les cations U⁴⁺ et Ce⁴⁺ présents dans les mélanges A à C précipitent sous la forme d'un hydroxyde mixte d'uranium(IV) et de cérium(IV), conformément à la réaction chimique (7) suivante :

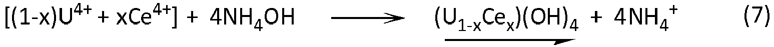

Or, ce précipité d'hydroxyde mixte d'uranium(IV) et de cérium(IV) est un composé très réactif qui évolue spontanément vers la formation d'un oxyde mixte d'uranium(IV) et de cérium(IV) hydraté, selon la réaction chimique (8) suivante :

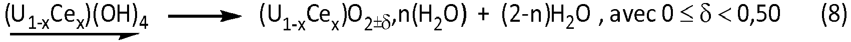

### Compactage des oxydes mixtes d'uranium(IV) et de cérium(IV) hydratés

Les poudres d'oxydes mixtes d'uranium(IV) et de cérium(IV) hydratés conformes à l'invention, telles qu'obtenues à partir des mélanges A à C, sont compactées par un pressage uniaxial à une pression de 500 MPa. Les pastilles à cru ainsi obtenues présentent toutes une densité comprise entre 40% et 45%.

### Frittage des oxydes mixtes d'uranium(IV) et de cérium(IV) hydratés

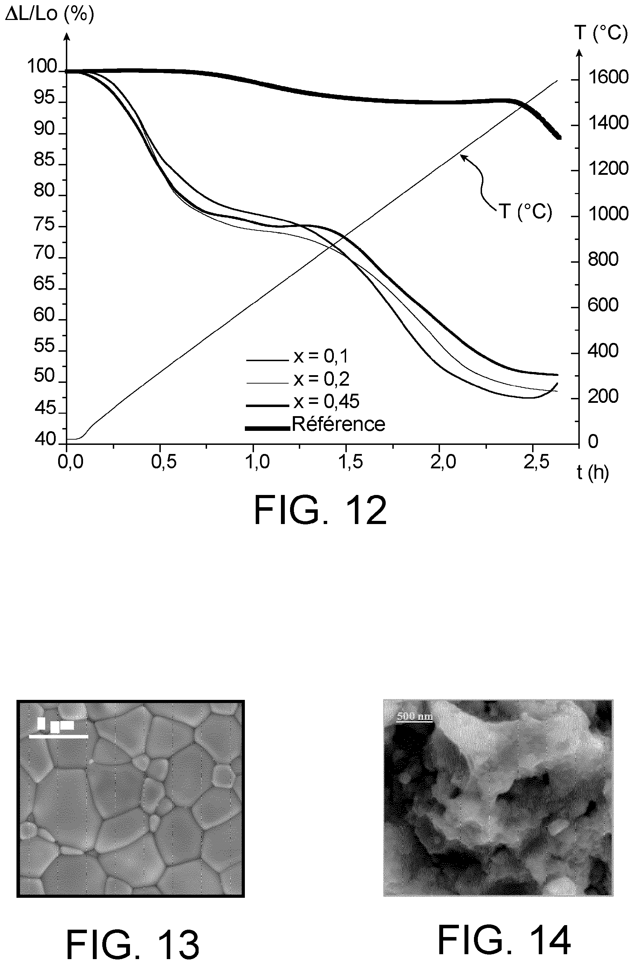

Un suivi du retrait linéaire des pastilles compactées a été effectué par dilatométrie en fonction de la température. Les trois courbes correspondantes obtenues sont illustrées sur la figure 12.

Ces courbes de la figure 12 présentent deux parties, une première partie s'étendant de la température ambiante jusqu'à une température d'environ 900°C, qui correspond à l'intervalle de températures dans lequel se produit la déshydratation des oxydes mixtes d'uranium(IV) et de cérium(IV) hydratés en oxydes mixtes d'uranium(IV) et de cérium(IV) anhydres, ainsi qu'une seconde partie, s'étendant de 900°C environ jusqu'à environ 1600°C, qui correspond à l'intervalle de températures dans lequel se produit le frittage des particules d'oxydes mixtes d'uranium(IV) et de cérium(IV) anhydres formant chacune des pastilles.

A titre de comparaison, on a reporté sur cette même figure 12, la courbe de retrait linéaire d'une pastille de référence compactée selon les mêmes conditions que les pastilles d'oxydes mixtes d'uranium(IV) et de cérium(IV), mais réalisée à partir d'une poudre préparée par le procédé décrit dans le document **[5].**

On observe donc que la vitesse de retrait linéaire maximale est obtenue à une température d'environ 1600°C avec la pastille de référence tandis qu'elle est atteinte à une température de l'ordre de 1100°C à 1200°C avec une pastille obtenue selon le procédé de l'invention, soit avec un gain de l'ordre de 400°C à 500°C.

Des mesures géométriques ont permis de caractériser la pastille obtenue, à partir du mélange A (x=0,1), conformément au procédé selon l'invention, au terme de l'analyse par dilatométrie. De telles mesures géométriques indiquent que le matériau obtenu est un matériau dense, présentant une densité de 95%.

Ce constat est confirmé par le cliché micrographique (MEB) de la figure 13 de cette même pastille obtenue après traitement thermique. Ce cliché met clairement en évidence que le matériau obtenu après frittage de la pastille d'oxyde mixte d'uranium(IV) et de cérium(IV) anhydre (avec x=0,1) est particulièrement dense.

### Exemple 5 : Synthèse d'un oxyde mixte de cérium(IV) et de gadolinium(III) hydraté

### Préparation des solutions aqueuses

Une solution aqueuse comprenant du chlorure de cérium(III) a été préparée par dissolution de chlorure de cérium(III) hydraté dans de l'eau déionisée puis dilution, toujours dans de l'eau déionisée, pour atteindre la concentration voulue.

Une solution aqueuse comprenant du chlorure de gadolinium(III) a été préparée par dissolution de chlorure de gadolinium(III) hydraté dans de l'eau déionisée puis dilution, toujours dans de l'eau déionisée, pour atteindre la concentration voulue.

Comme précédemment, chacune de ces solutions aqueuses a été titrée par un dosage colorimétrique et par ICP-AES.

### Synthèse d'un oxyde mixte de cérium(IV) et de gadolinium(III) hydraté

Un mélange, noté D, a été réalisé à partir des solutions aqueuses telles que préparées à l'étape précédente, avec une proportion molaire de 20% en élément gadolinium, notée z, avec z=0,2.

La synthèse de l'oxyde mixte de cérium(IV) et de gadolinium(III) hydraté a été réalisée par addition, au mélange D tel que préparé ci-dessus, d'hydroxyde d'ammonium à une teneur molaire de 400% par rapport à la somme des teneurs molaires en chlorure de cérium(III) et en chlorure de gadolinium(III) présents dans le mélange D. Cette addition d'hydroxyde d'ammonium a été réalisée à température ambiante et sous agitation, à une vitesse de 500 tr/min. L'agitation a été maintenue pendant une durée d'une heure.

Au terme de cette heure, on a obtenu un précipité. Après filtration du précipité, l'analyse par ICP-AES du filtrat montre une précipitation quantitative du cérium et du gadolinium avec un rendement de précipitation supérieur ou égal à 99,9%.

Après plusieurs lavages à l'eau déionisée, puis à l'éthanol, permettant d'éliminer toute trace d'acide résiduel, le précipité est séparé de la phase liquide par centrifugation à une vitesse de 4000 tr/min.

Le précipité ainsi obtenu est introduit dans un ballon avec de l'éthanol. Le ballon comprenant le précipité et l'éthanol est alors placé sous un vide dynamique inférieur à 100 Pa (1 mbar) au moyen d'une rampe à vide. Le précipité est agité à une vitesse de 500 tr/min, à une température de 40°C pour permettre l'évaporation de l'éthanol.

A l'issue de cette étape d'évaporation de l'éthanol, on obtient une poudre. L'agitation de cette poudre est maintenue pendant 5 minutes puis le vide est cassé.

La poudre telle qu'obtenue après l'étape de séchage sous vide du précipité a été analysée.

La surface spécifique telle que mesurée selon la méthode BET, par adsorption d'azote à la température d'ébullition de l'azote liquide (-196°C), se situe dans un intervalle de valeurs comprises entre 100 m²/g de 130 m²/g. Cette valeur, qui correspond à une grande surface spécifique, traduit une forte réactivité de la poudre ainsi obtenue.

Une étude morphologique de la poudre a également été réalisée par microscopie électronique à balayage (MEB). Le cliché correspondant, illustré à la figure 14, montre que la poudre ne s'agglomère pas et qu'elle se compose de particules de taille nanométrique.

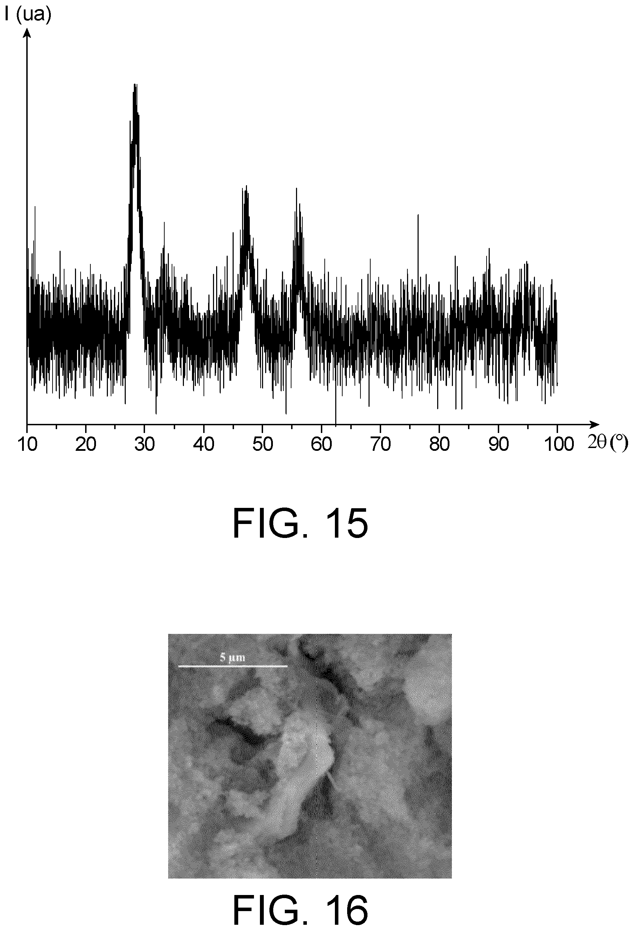

Pour déterminer la composition des particules de cette poudre, une analyse par diffractométrie de rayons X (DRX) a été réalisée. Le diffractogramme correspondant est illustré à la figure 15.

On observe que le diffractogramme de la figure 15 révèle la présence d'un solide présentant une structure cristallographique cubique à faces centrées du type fluorine, de groupe d'espace *Fm-3m,* qui est caractéristique du dioxyde de cérium. Par ailleurs, ce diffractogramme met également en évidence une faible cristallinité présentée par les particules formant la poudre.

Des analyses complémentaires par spectrométrie Raman mettent en évidence l'absence de la bande de vibration caractéristique des groupements OH et confirment la présence d'un oxyde mixte hydraté.

Ces analyses par DRX et par spectrométrie Raman permettent d'expliquer les phénomènes réactionnels qui se produisent lors de la réaction du chlorure de cérium(III) et du chlorure de gadolinium(III) avec l'hydroxyde d'ammonium.

En effet, au contact de l'hydroxyde d'ammonium, les cations Ce³⁺ et Gd³⁺ présents dans le mélange D précipitent sous la forme d'un hydroxyde mixte de cérium(III) et de gadolinium(III), conformément à la réaction chimique (9) suivante :

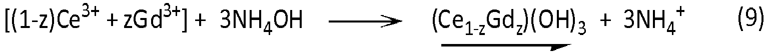

Or, ce précipité hydroxyde mixte de cérium(III) et de gadolinium(III) est un composé très réactif qui évolue spontanément vers la formation d'un oxyde mixte de cérium(IV) et de gadolinium(III) hydraté, selon la réaction chimique (10) suivante :

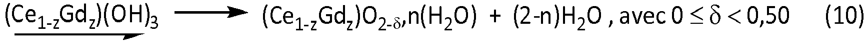

### Exemple 6 : Synthèse d'un oxyde mixte de thorium(IV) et d'uranium(VI) hydraté

### Préparation des solutions aqueuses

Une solution aqueuse comprenant du nitrate d'uranium(VI) a été préparée par dissolution d'uranium sous forme UO₄,4H₂O dans de l'acide nitrique (6M).

Une solution aqueuse comprenant du nitrate de thorium(IV) a été préparée par dissolution de nitrate de thorium hydraté dans de l'acide chlorhydrique à une concentration molaire de 6 mol/L.

Pour minimiser les erreurs liées au caractère hygroscopique du nitrate de thorium(IV), cette solution aqueuse comprenant du nitrate de thorium(IV) a été titrée par spectrométrie d'émission atomique par plasma à couplage inductif (ICP-AES).

### Synthèse d'un oxyde mixte de thorium(IV) et d'uranium(VI) hydraté

Un mélange, noté E, a été réalisé à partir des solutions aqueuses telles que préparées à l'étape précédente, dans les stoechiométries respectives, en éléments thorium et uranium, de 0,8 et 0,2.

La synthèse de l'oxyde mixte de thorium(IV) et d'uranium(VI) hydraté a été réalisée par addition, au mélange E tel que préparé ci-dessus, d'hydroxyde d'ammonium à une teneur molaire de 400% par rapport à la somme des teneurs molaires en nitrate de thorium(IV) et en nitrate d'uranium(VI) présents dans le mélange E. Cette addition d'hydroxyde d'ammonium a été réalisée à température ambiante et sous agitation, à une vitesse de 500 tr/min. L'agitation a été maintenue pendant une durée d'une heure.

Au terme de cette heure, on a obtenu un précipité. Après filtration de ce précipité, les analyses par ICP-AES du filtrat montrent une précipitation quantitative de l'uranium et du thorium avec un rendement de précipitation supérieur ou égal à 99,9%.

Après plusieurs lavages à l'eau déionisée, puis à l'éthanol, permettant d'éliminer toute trace d'acide résiduel, le précipité est séparé de la phase liquide par centrifugation à une vitesse de 4000 tr/min.

Le précipité ainsi obtenu est introduit dans un ballon avec de l'éthanol. Le ballon comprenant le précipité et l'éthanol est alors placé sous un vide dynamique inférieur à 100 Pa (1 mbar) au moyen d'une rampe à vide. Le précipité est agité à une vitesse de 500 tr/min, à une température de 40°C pour permettre l'évaporation de l'éthanol.

A l'issue de cette étape d'évaporation de l'éthanol, on obtient une poudre. L'agitation de cette poudre est maintenue pendant 5 minutes puis le vide est cassé par introduction de diazote N₂, dans le ballon, au moyen de la rampe à vide.

La poudre telle qu'obtenue après l'étape de séchage sous vide du précipité a été analysée.

La surface spécifique telle que mesurée selon la méthode BET, par adsorption d'azote à la température d'ébullition de l'azote liquide (-196°C), pour cette poudre, est supérieure à 100 m²/g. Une telle valeur, qui caractérise une grande surface spécifique, traduit une forte réactivité de la poudre obtenue à partir du mélange E.

Une étude morphologique de la poudre a également été réalisée par microscopie électronique à balayage (MEB). Le cliché correspondant, qui est illustré à la figure 16, montre que la poudre ne s'agglomère pas et qu'elle se compose de particules de taille nanométrique.

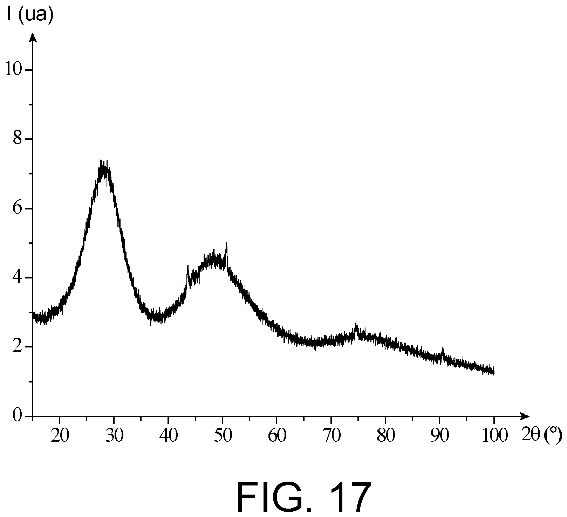

Pour déterminer la structure des particules de cette poudre, une analyse par diffractométrie de rayons X (DRX) a été réalisée. Le diffractogramme correspondant est illustré à la figure 17.

On observe que le diffractogramme de la figure 17 révèle la présence d'un solide présentant une structure cristallographique cubique à faces centrées du type fluorine, de groupe d'espace *Fm-3m,* qui est caractéristique des dioxydes mixtes d'actinides. Par ailleurs, ce diffractogramme met également en évidence une faible cristallinité présentée par les particules formant cette poudre.

### BIBLIOGRAPHIE

**[1]** GB 1,128,838
**[2]** US 4,314,952
**[3]** US 4,382,885
**[4]** US 4,971,734
**[5]** N.Hingant et al., Journal of Nuclear Materials, 2009, 385, pages 400-406

## Revendications

1. Procédé de préparation d'une poudre d'un oxyde d'au moins un métal, chaque métal ayant un nombre d'oxydation compris entre (III) et (VI), lequel procédé comprend successivement et dans cet ordre :
(a) la réaction, avec un composé comprenant un hydroxyde, d'une solution aqueuse comprenant, pour chaque métal, au moins un sel du cation dudit métal, conduisant à un précipité de l'oxyde hydraté dudit au moins un métal,
(b) la séparation du précipité obtenu,
(c) la mise en contact du précipité séparé avec un solvant polaire protique organique,
(d) l'élimination du solvant polaire protique organique par séchage sous vide du précipité, conduisant à la poudre de l'oxyde hydraté dudit au moins un métal,
ladite poudre étant formée de particules dont le diamètre moyen est inférieur ou égal à 1 µm, avantageusement inférieur ou égal à 100 nm et, de préférence, inférieur ou égal à 10 nm et, de manière optionnelle, présentant une surface spécifique, mesurée selon la méthode BET, supérieure ou égale à 30 m²/g, avantageusement supérieure ou égale à 80 m²/g et, de préférence, supérieure ou égale à 100 m²/g.

2. Procédé selon la revendication 1, dans lequel le procédé comprend en outre, après l'étape (b) et avant l'étape (c), une étape de lavage du précipité séparé, ce lavage étant notamment réalisé par un solvant protique, éventuellement en mélange avec de l'eau, cette eau étant, de préférence, de l'eau déionisée.

3. Procédé selon la revendication 1 ou 2, dans lequel le procédé comprend en outre, après l'étape (d) :
(e) le traitement thermique de la poudre de l'oxyde hydraté dudit au moins un métal, conduisant à la poudre de l'oxyde anhydre dudit au moins un métal.

4. Procédé selon l'une quelconque des revendications 1 à 3, dans lequel chaque métal est choisi parmi les actinides tels que U, Th, Pu, Np, Am et Cm, les lanthanides tels que Ce, Gd, Nd, Sm et Eu, et les métaux de transition tels que Ti, Cr, Zr, Sc, Y et Hf.

5. Procédé selon l'une quelconque des revendications 1 à 4, dans lequel l'oxyde hydraté dudit au moins un métal est un oxyde simple, cet oxyde étant de préférence choisi parmi UO_{2+δ}, UO₃, U₃O₈, CeO_{2-δ}, ThO₂, PuO_{2-δ}, NpO_{2+δ}, ZrO₂ et HfO₂.

6. Procédé selon l'une quelconque des revendications 1 à 5, dans lequel l'oxyde hydraté dudit au moins un métal est un oxyde mixte, cet oxyde étant de préférence choisi parmi (U,Ce)O_{2±δ}, (U,Pu)O_{2±δ}, (U,Am)O_{2±δ}, (U,Th)O_{2+δ}, (Ce,Gd)O_{2-δ}, (U,Gd)O_{2±δ}, (Th,Pu)O_{2-δ}, (Th,Y)O_{2-δ} et (U,Pu,Am)O_{2±δ}.

7. Procédé selon l'une quelconque des revendications 1 à 6, dans lequel, pour chaque métal, le sel du cation dudit au moins un métal est choisi parmi un sulfate, un nitrate, un halogénure tel qu'un chlorure ou un bromure.

8. Procédé selon l'une quelconque des revendications 1 à 7, dans lequel le composé comprenant un hydroxyde est l'hydroxyde d'ammonium ou l'hydroxyde d'hydrazinium.

9. Procédé selon l'une quelconque des revendications 1 à 8, dans lequel la teneur molaire en composé comprenant un hydroxyde est en excès par rapport à la teneur molaire totale en cation(s) dudit au moins un métal, cette teneur molaire en composé comprenant un hydroxyde étant avantageusement comprise entre 150% et 600% et, de préférence, entre 300% et 500%, par rapport à la teneur molaire totale en cation(s) dudit au moins métal.

10. Procédé selon l'une quelconque des revendications 1 à 9, dans lequel le solvant polaire protique organique est choisi parmi un acide carboxylique, une amine primaire et un alcool, cet alcool étant avantageusement un monoalcool ou un diol, de préférence choisi dans le groupe constitué par le méthanol, l'éthanol et l'éthanediol.

11. Procédé selon l'une quelconque des revendications 1 à 10, dans lequel le séchage sous vide est réalisé au moyen d'une rampe à vide.

12. Poudre d'un oxyde d'au moins un métal, chaque métal ayant un nombre d'oxydation compris entre (III) et (VI), obtenue par le procédé selon l'une quelconque des revendications 1 à 11, ladite poudre étant formée de particules dont le diamètre moyen est inférieur ou égal à 1 µm et présentant une surface spécifique, mesurée selon la méthode BET, supérieure ou égale à 80 m²/g.

13. Utilisation de la poudre selon la revendication 12
- pour la fabrication de combustible nucléaire,
- comme support de catalyse,
- dans un procédé d'hydrofluoration,
- pour la fabrication d'un conducteur ionique,
- pour la fabrication d'une céramique, ou
- le métal étant l'uranium, pour la préparation d'octaoxyde de triuranium U₃O₈.

14. Procédé de fabrication d'une pastille d'un oxyde d'au moins un métal, chaque métal ayant un nombre d'oxydation compris entre (III) et (VI), notamment d'une pastille de combustible nucléaire ou de conducteur ionique, lequel procédé comprend successivement et dans cet ordre :
(1) la préparation d'une poudre d'un oxyde d'au moins un métal, chaque métal ayant un nombre d'oxydation compris entre (III) et (VI), par la mise en oeuvre du procédé selon l'une quelconque des revendications 1 à 11,
(2) le compactage de la poudre, et
(3) le traitement thermique de la poudre compactée, conduisant à la pastille de l'oxyde d'au moins un métal,
la pastille de l'oxyde d'au moins un métal présentant notamment une densité d'au moins 90% et, avantageusement, d'au moins 95%.

15. Procédé selon la revendication 14, dans lequel l'étape (3) de traitement thermique est réalisée par application d'un gradient de températures s'étendant de la température ambiante jusqu'à une température inférieure ou égale à 1600°C et, avantageusement, inférieure ou égale à 1400°C.

## Patentansprüche

1. Verfahren zur Herstellung eines Pulvers eines Oxids mindestens eines Metalls, wobei jedes Metall eine Oxidationszahl zwischen (III) und (VI) aufweist, wobei das Verfahren nacheinander und in der angegebenen Reihenfolge Folgendes umfasst:
(a) die Umsetzung einer wässrigen Lösung, die für jedes Metall mindestens ein Salz des Kations des Metalls umfasst, mit einer Verbindung, die ein Hydroxid umfasst, was einen Niederschlag des Oxidhydrats des mindestens einen Metalls ergibt,
(b) die Abtrennung des erhaltenen Niederschlags,
(c) das Inkontaktbringen des abgetrennten Niederschlags mit einem organischen protischen polaren Lösungsmittel,
(d) die Entfernung des organischen protischen polaren Lösungsmittels durch Trocknen des Niederschlags unter Vakuum, was ein Pulver des Oxidhydrats des mindestens einen Metalls ergibt,
wobei das Pulver aus Teilchen mit einem mittleren Durchmesser kleiner oder gleich 1 µm, vorteilhafterweise kleiner oder gleich 100 nm und vorzugsweise kleiner oder gleich 10 nm besteht und gegebenenfalls eine gemäß der BET-Methode gemessene spezifische Oberfläche größer oder gleich 30 m²/g, vorteilhafterweise größer oder gleich 80 m²/g und vorzugsweise größer oder gleich 100 m²/g aufweist.

2. Verfahren nach Anspruch 1, bei dem das Verfahren außerdem nach Schritt (b) und vor Schritt (c) einen Schritt des Waschens des abgetrennten Niederschlags umfasst, wobei dieses Waschen insbesondere mit einem protischen Lösungsmittel, gegebenenfalls in Abmischung mit Wasser, durchgeführt wird, wobei es sich bei diesem Wasser vorzugsweise um vollentsalztes Wasser handelt.

3. Verfahren nach Anspruch 1 oder 2, bei dem das Verfahren außerdem nach Schritt (d) Folgendes umfasst:
(e) Wärmebehandlung des Pulvers des Oxidhydrats des mindestens einen Metalls, was das Pulver des wasserfreien Oxids des mindestens einen Metalls ergibt.

4. Verfahren nach einem der Ansprüche 1 bis 3, bei dem jedes Metall aus den Actiniden wie U, Th, Pu, Np, Am und Cm, den Lanthaniden wie Ce, Gd, Nd, Sm und Eu und den Übergangsmetallen wie Ti, Cr, Zr, Sc, Y und Hf ausgewählt ist.

5. Verfahren nach einem der Ansprüche 1 bis 4, bei dem es sich bei dem Oxidhydrat des mindestens einen Metalls um ein einfaches Oxid handelt, wobei dieses Oxid vorzugsweise aus UO_{2+δ}, UO₃, U₃O₈, CeO_{2-δ}, ThO₂, PUO_{2-δ}, NpO_{2+δ}, ZrO₂ und HfO₂ ausgewählt ist.

6. Verfahren nach einem der Ansprüche 1 bis 5, bei dem es sich bei dem Oxidhydrat des mindestens einen Metalls um ein Mischoxid handelt, wobei dieses Oxid vorzugsweise aus (U,Ce)O_{2+δ}, (U,Pu)O_{2+δ}, (U,Am)O_{2+δ}, (U,Th)O_{2+δ}, (Ce,Gd)O_{2-δ}, (U,Gd)O_{2+δ}, (Th,Pu)O₂₋₅, (Th,Y)O_{2-δ} und (U,Pu,Am)O_{2±δ} ausgewählt ist.

7. Verfahren nach einem der Ansprüche 1 bis 6, bei dem für jedes Metall das Salz des Kations des mindestens einen Metalls aus einem Sulfat, einem Nitrat und einem Halogenid wie einem Chlorid oder einem Bromid ausgewählt ist.

8. Verfahren nach einem der Ansprüche 1 bis 7, bei dem es sich bei der Verbindung, die ein Hydroxid umfasst, um Ammoniumhydroxid oder Hydraziniumhydroxid handelt.

9. Verfahren nach einem der Ansprüche 1 bis 8, bei dem der molare Gehalt an Verbindung, die ein Hydroxid umfasst, in Bezug auf den gesamten molaren Gehalt an Kation(en) des mindestens einen Metalls überschüssig ist, wobei dieser molare Gehalt an Verbindung, die ein Hydroxid umfasst, vorteilhafterweise zwischen 150 % und 600 % und vorteilhafterweise zwischen 300 % und 500 %, bezogen auf den gesamten molaren Gehalt an Kation(en) des mindestens einen Metalls, liegt.

10. Verfahren nach einem der Ansprüche 1 bis 9, bei dem das organische protische polare Lösungsmittel aus einer Carbonsäure, einem primären Amin und einem Alkohol ausgewählt wird, wobei es sich bei diesem Alkohol vorteilhafterweise um einen Monoalkohol oder ein Diol handelt, vorzugsweise ausgewählt aus der Gruppe bestehend aus Methanol, Ethanol und Ethandiol.

11. Verfahren nach einem der Ansprüche 1 bis 10, bei dem das Trocknen unter Vakuum mit Hilfe einer Vakuumlinie durchgeführt wird.

12. Pulver eines Oxids mindestens eines Metalls, wobei jedes Metall eine Oxidationszahl zwischen (III) und (VI) aufweist, erhalten durch das Verfahren nach einem der Ansprüche 1 bis 11, wobei das Pulver aus Teilchen mit einem mittleren Durchmesser kleiner oder gleich 1 µm besteht und eine gemäß der BET-Methode gemessene spezifische Oberfläche größer oder gleich 80 m²/g aufweist.

13. Verwendung des Pulvers nach Anspruch 12
- zur Herstellung von Kernbrennstoff,
- als Katalyseträger,
- bei einem Hydrofluorierungsverfahren,
- zur Herstellung eines Ionenleiters,
- zur Herstellung einer Keramik oder
- wenn es sich bei dem Metall um Uran handelt, zur Herstellung von Triuranoctaoxid U₃O₈.

14. Verfahren zur Herstellung einer Tablette eines Oxids mindestens eines Metalls, wobei jedes Metall eine Oxidationszahl zwischen (III) und (VI) aufweist, insbesondere einer Kernbrennstoff- oder Ionenleitertablette, wobei das Verfahren nacheinander und in der angegebenen Reihenfolge Folgendes umfasst:
(1) die Herstellung eines Pulvers eines Oxids mindestens eines Metalls, wobei jedes Metall eine Oxidationszahl zwischen (III) und (VI) aufweist, durch Anwendung des Verfahrens nach einem der Ansprüche 1 bis 11,
(2) die Kompaktierung des Pulvers und
(3) die Wärmebehandlung des kompaktierten Pulvers, was die Tablette des Oxids mindestens eines Metalls ergibt,
wobei die Tablette des Oxids mindestens eines Metalls insbesondere eine Dichte von mindestens 90 % und vorteilhafterweise von mindestens 95 % aufweist.

15. Verfahren nach Anspruch 14, bei dem der Wärmebehandlungschritt (3) durch Anwendung eines Temperaturgradienten, der sich von Raumtemperatur bis zu einer Temperatur kleiner oder gleich 1600 °C und vorteilhafterweise kleiner gleich 1400 °C erstreckt.

## Claims

1. A process for preparing a powder of an oxide of at least one metal, each metal having an oxidation number between (III) and (VI), which process comprises successively and in this order:
(a) reacting, with a compound comprising a hydroxide, an aqueous solution comprising, for each metal, at least one salt of the cation of said metal, leading to a precipitate of the hydrated oxide of said at least one metal,
(b) separating the precipitate obtained,
(c) contacting the separated precipitate with an organic protic polar solvent,
(d) removing the organic protic polar solvent by vacuum drying the precipitate, leading to the powder of the hydrated oxide of said at least one metal,
said powder being formed of particles the average diameter of which is equal to or lower than 1 µm, advantageously equal to or lower than 100 nm and, preferably, equal to or lower than 10 nm and, optionnally, having a specific surface area, measured according to the BET method, equal to or higher than 30 m²/g, advantageously equal to or higher than 80 m²/g and, preferably, equal to or higher than 100 m²/g.

2. The process according to claim 1, wherein the process further comprises, after step (b) and before step (c), a step of washing the separated precipitate, this washing being in particular performed by a protic solvent, optionally in mixture with water, this water being, preferably, deionized water.

3. The process according to claim 1 or 2, wherein the process further comprises, after step (d):
(e) heat treating the powder of the hydrated oxide of said at least one metal, leading to the powder of the anhydrous oxide of said at least one metal.

4. The process according to any of claims 1 to 3, wherein each metal is chosen from actinides such as U, Th, Pu, Np, Am and Cm, lanthanides such as Ce, Gd, Nd, Sm and Eu and transition metals such as Ti, Cr, Zr, Sc, Y and Hf.

5. The process according to any of claims 1 to 4, wherein the hydrated oxide of said at least one metal is a single oxide, this oxide being preferably chosen from UO_{2+δ}, UO₃, U₃O₈, CeO_{2-δ}, ThO₂, PuO_{2-δ}, NpO_{2+δ}, ZrO₂ and HfO₂.

6. The process according to any of claims 1 to 5, wherein the hydrated oxide of said at least one metal is a mixed oxide, this oxide being preferably chosen from (U,Ce)O_{2±δ}, (U,Pu)O_{2±δ}, (U,Am)O_{2±δ}, (U,Th)O_{2+δ}, (Ce,Gd)O_{2-δ}, (U,Gd)O_{2±δ}, (Th,Pu)O_{2-δ}, (Th,Y)O_{2-δ} and (U,Pu,Am)O_{2±δ}.

7. The process according to any of claims 1 to 6, wherein, for each metal, the salt of the cation of said at least one metal is chosen from a sulphate, nitrate, halide such as a chloride or a bromide.

8. The process according to any of claims 1 to 7, wherein the compound comprising a hydroxide is ammonium hydroxide or hydrazinium hydroxide.

9. The process according to any of claims 1 to 8, wherein the molar content of the compound comprising a hydroxide is in excess with respect to the total molar content of cation(s) of said at least one metal, this molar content of the compound comprising a hydroxide being advantageously between 150% and 600% and, preferably, between 300% and 500%, with respect to the total molar content of cation(s) of said at least one metal.

10. The process according to any of claims 1 to 9, wherein the organic protic polar solvent is chosen from a carboxylic acid, a primary amine and an alcohol, said alcohol being advantageously a monoalcohol or a diol, preferably chosen from the group consisting of methanol, ethanol and ethanediol.

11. The process according to any of claims 1 to 10, wherein the vacuum drying is made by means of a vacuum manifold.

12. A powder of an oxide of at least one metal, each metal having an oxidation number between (III) and (VI), obtained by the process according to any of claims 1 to 11, said powder being formed of particles the average diameter of which is equal to or lower than 1 µm and having a specific surface area, measured according to the BET method, equal to or higher than 80 m²/g.

13. A use of the powder according to claim 12
- for manufacturing nuclear fuel,
- as a catalyst support,
- in a hydrofluorination process,
- for manufacturing an ionic conductor,
- for manufacturing ceramics, or
- the metal being uranium, for preparing triuranium octaoxide U₃O₈.

14. A process for manufacturing a pellet of an oxide of at least one metal, each metal having an oxidation number between (III) and (VI), in particular a nuclear fuel pellet or a ionic conductor pellet, which process comprises successively and in this order:
(1) preparing a powder of an oxide of at least one metal, each metal having an oxidation number between (III) and (VI), by implementing the process according to any of claims 1 to 11,
(2) compacting the powder, and
(3) heat treating the compacted powder, leading to the pellet of the oxide of at least one metal,
the pellet of an oxide of at least one metal having, in particular, a density of at least 90% and, advantageously, at least 95%.

15. The process according to claim 14, wherein the step (3) of heat treating is made by applying a temperature gradient extending from room temperature to a temperature equal to or lower than 1600°C and, advantageously, equal to or lower than 1400°C.
